# EUROPEAN PATENT APPLICATION

(11) **EP 2 276 098 A1**
(43) Date of publication of application: **19.01.2011**
(21) Application number: 10007095.2
(22) Date of filing: 09.07.2010
(51) Int. Cl.: H01M 10/42, H01M 10/0525, H01M 10/0567, H01M 4/13, H01M 4/133, H01M 4/62, H01M 4/134, H01M 4/1315, H01M 4/525, H01M 4/131, H01M 4/02, H01M 4/36

(54) **Secondary battery, anode, cathode and electrolyte**

(30) Priority: 16.07.2009 JP 2009168098
(71) Applicant: Sony Corporation, Tokyo 108-0075 (JP)
(72) Inventor: Nakai, Hideki, Tokyo 108-0075 (JP); Ooyama, Tomoyo, Tokyo 108-0075 (JP); Ihara, Masayuki, Tokyo 108-0075 (JP); Saito, Shunsuke, Tokyo 108-0075 (JP); Katayama, Shinichi, Tokyo 108-0075 (JP)
(74) Representative: Müller - Hoffmann & Partner

(57) **Abstract**

A secondary battery, a cathode, an anode, and an electrolyte are provided. For example, a secondary battery is provided including an anode; a cathode; and an electrolyte, wherein the anode includes an anode active material and a coat including a substance selected from the group consisting of metal barium and barium compounds.

## Description

### CROSS REFERENCES TO RELATED APPLICATIONS

The present application claims priority to Japanese Priority Patent Application JP 2009-168098 filed in the Japanese Patent Office on July 16, 2009, the entire contents of which is hereby incorporated by reference.

### BACKGROUND

The present application relates to an anode and a cathode capable of inserting and extracting an electrode reactant, an electrolyte containing a solvent and an electrolyte salt, and a secondary battery including the anode, the cathode and the electrolyte.

In recent years, portable electronic devices such as combination cameras, digital still cameras, mobile phones, and notebook personal computers have been widely used, and it is strongly demanded to reduce their size and weight and to achieve their long life. Accordingly, as a power source, a battery, in particular a small light-weight secondary batter capable of providing a high energy density has been developed.

Specially, a secondary battery using insertion and extraction of an electrode reactant for charge and discharge reaction is extremely prospective, since such a secondary battery is able to provide a higher energy density compared to a lead battery and a nickel cadmium battery. As such a secondary battery, a lithium ion secondary battery in which lithium ions are used as an electrode reactant and the like have been known.

The secondary battery includes an electrolyte together with a cathode and an anode capable of inserting and extracting the electrode reactant. In the electrolyte, an electrolyte salt or the like is dissolved in a solvent.

For the structure of the secondary battery, various studies have been made to improve various performances. Specifically, to improve battery life characteristics, high temperature storage characteristics, and a battery capacity, it has been proposed to use a carbon core covered with a coating layer containing a fluorine system organic metal salt (for example, see Japanese Unexamined Patent Application Publication No. 2005-505487). Further, to improve charge and discharge characteristics, productivity, and safety, it has been proposed to provide a protective layer containing a conductive carbon material and insulative metal oxide particles on the surface of a combination layer of an anode (for example, see Japanese Patent No. 3809662). Further, to improve charge and discharge cycle characteristics, it has been proposed to contain a metal perchlorate in a nonaqueous electrolyte (for example, see Japanese Unexamined Patent Application Publication No. 2006-278185).

### SUMMARY

In these years, the high performance and the multi functions of the portable electronic devices are increasingly developed, and the electric power consumption thereof tends to be increased. Thus, charge and discharge of the secondary battery are frequently repeated, and the cycle characteristics tend to be lowered. Accordingly, further improvement of the cycle characteristics of the secondary battery has been aspired.

In view of the foregoing, it is desirable to provide a secondary battery, an anode, a cathode, and an electrolyte with which cycle characteristics are able to be improved.

According to an embodiment, there is provided a secondary battery comprising an anode, a cathode and an electrolyte, wherein the anode includes an anode active material and a coat comprising a substance selected from the group consisting of metal barium and barium compounds.

According to an embodiment, there is provided a secondary battery comprising an anode, a cathode and an electrolyte, wherein the cathode includes a substance selected from the group consisting of metal barium and barium compounds.

According to an embodiment, there is provided a secondary battery comprising an anode, a cathode and an electrolyte, wherein the electrolyte includes a barium compound.

According to an embodiment, there is provided an anode comprising an anode active material and a coat comprising a substance selected from the group consisting of metal barium and barium compounds.

According to an embodiment, there is provided a cathode comprising a cathode active material and a substance selected from the group consisting of metal barium and barium compounds.

According to an embodiment, there is provided an electrolyte comprising a solvent, an electrolyte salt and a barium compound.

The anode of the embodiment has the coat composed of metal barium or the like. Thus, chemical stability is improved. Further, the cathode of the embodiment contains metal barium or the like. Thus, at the time of charge and discharge, the coat composed of metal barium or the like is formed on the anode. Further, the electrolyte of the embodiment contains barium oxide or the like. Thus, at the time of charge and discharge, the coat composed of metal barium or the like is formed on the anode. Thereby, in the secondary battery including the anode, the cathode, or the electrolyte of the embodiments , reactivity of the anode is decreased, and thus decomposition reaction of the electrolyte at the time of charge and discharge is inhibited.

According to the secondary battery, the anode, the cathode, or the electrolyte of an embodiment , the anode has the coat composed of at least one of metal barium, barium oxide, barium hydroxide, barium halide, barium carbonate, barium sulfate, barium nitrate, barium phosphate, barium oxalate, and barium acetate. Otherwise, the cathode contains the foregoing metal barium or the like. Otherwise, the electrolyte contains the foregoing barium oxide or the like. Accordingly, cycle characteristics are able to be improved.

Additional features and advantages are described herein, and will be apparent from the following Detailed Description and the figures.

### BRIEF DESCRIPTION OF THE FIGURES

FIG. 1 is a cross sectional view illustrating a structure of a cylinder type secondary battery in a first embodiment .

FIG. 2 is a cross sectional view illustrating an enlarged part of a spirally wound electrode body illustrated in FIG. 1.

FIG. 3 is a plan view illustrating a structure of a cathode and an anode illustrated in FIG. 2.

FIG. 4 is a cross sectional view illustrating a structure of an anode active material particle and an anode active material particle coating film.

FIG. 5 is an exploded perspective view illustrating a structure of a laminated film type secondary battery in the first embodiment.

FIG. 6 is a cross sectional view illustrating a structure taken along line VI-VI of the spirally wound electrode body illustrated in FIG. 5.

FIG. 7 is a cross sectional view illustrating an enlarged part of a spirally wound electrode body illustrated in FIG. 6.

FIG. 8 is a cross sectional view illustrating a structure of a coin type secondary battery in the first embodiment.

FIG. 9 is a cross sectional view illustrating a structure of a spirally wound electrode body of a cylinder type secondary battery in a second embodiment.

FIG. 10 is a plan view illustrating a structure of the cathode and the anode illustrated in FIG. 9.

FIG. 11 is a cross sectional view illustrating a structure of a spirally wound electrode body of a laminated film type secondary battery in the second embodiment.

FIG. 12 is a cross sectional view illustrating a structure of a coin type secondary battery in the second embodiment.

FIG. 13 is a diagram illustrating a surface analytical result of an anode by XPS.

FIGs. 14A and 14B are diagrams illustrating a surface analytical result of an anode by TOF-SIMS.

FIG. 15 is a diagram illustrating an analytical result of SnCoC by XPS.

### DETAILED DESCRIPTION

Embodiments of the present application will be described below with reference to the accompanying drawings.

1. First embodiment (secondary battery in which an anode contains metal barium or the like)

1-1. Cylinder type secondary battery

1-1-1. Anode active material layer coating film

1-1-2. Anode active material particle coating film

1-2. Laminated film type secondary battery

1-3. Coin type secondary battery

2. Second embodiment (secondary battery in which a cathode contains metal barium or the like)

3. Third embodiment (secondary battery in which an electrolyte contains barium oxide or the like)

1. First embodiment (secondary battery in which an anode contains a metal barium or the like)

1-1. Cylinder type secondary battery

1-1-1. Anode active material layer coating film

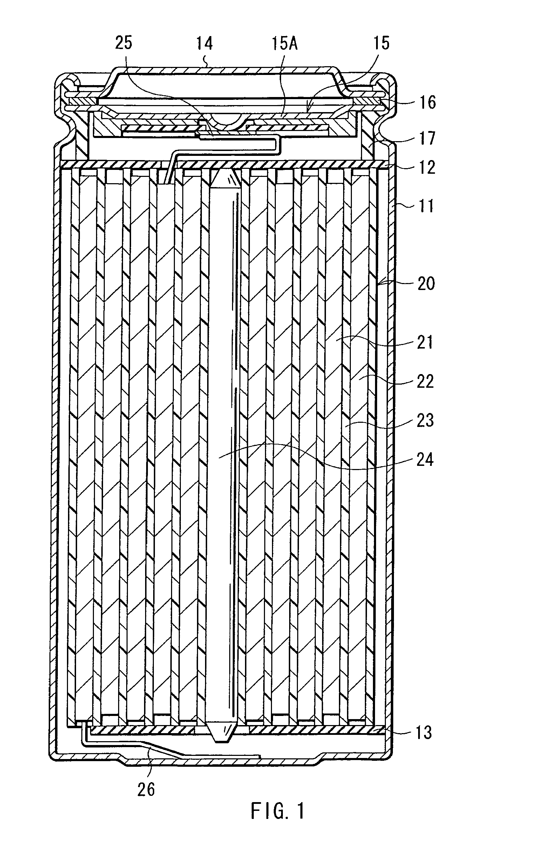

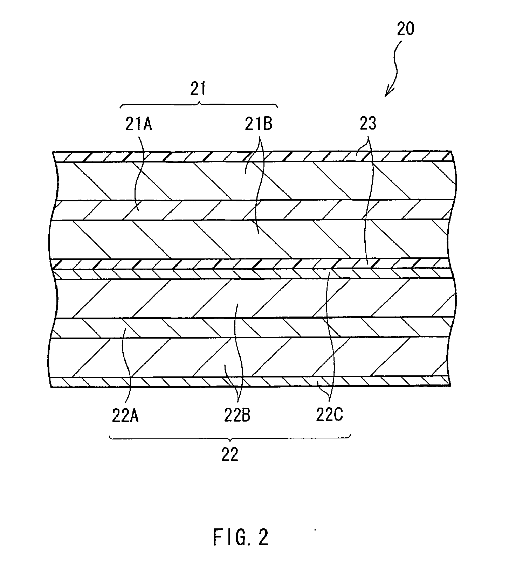

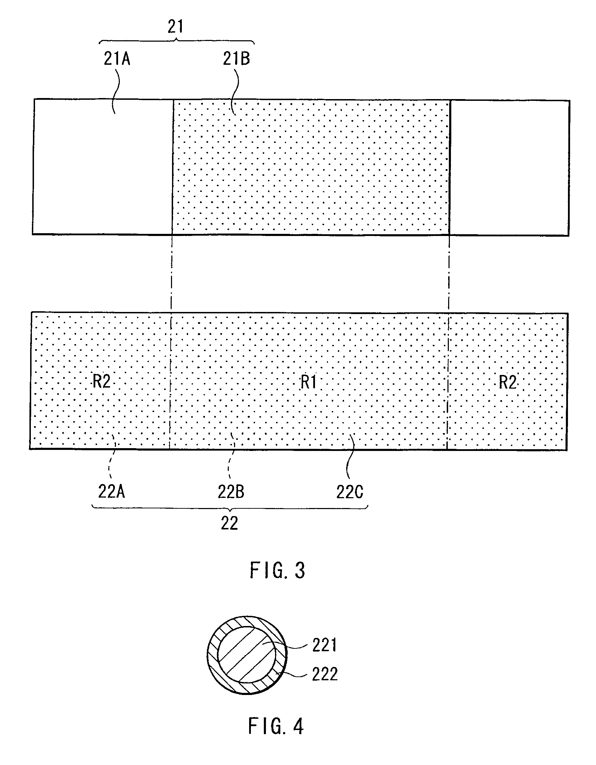

First, a description will be given of a secondary battery of a first embodiment. FIG. 1 illustrates a cross sectional structure of a cylinder type secondary battery. FIG. 2 illustrates an enlarged part of a spirally wound electrode body 20 illustrated in FIG. 1. FIG. 3 illustrates planar structures of a cathode 21 and an anode 22 illustrated in FIG. 2, respectively. The secondary battery herein described is, for example, a lithium ion secondary battery in which the anode capacity is expressed by insertion and extraction of lithium ion as an electrode reactant.

Whole structure of the secondary battery

The secondary battery mainly contains the spirally wound electrode body 20 and a pair of insulating plates 12 and 13 inside a battery can 11 in the shape of an approximately hollow cylinder as illustrated in FIG. 1.

The battery can 11 has a hollow structure in which one end of the battery can 11 is closed and the other end of the battery can 11 is opened. The battery can 11 is made of iron (Fe), aluminum (Al), an alloy thereof or the like. Plating of nickel (Ni) or the like may be provided on the surface of the battery can 11. The pair of insulating plates 12 and 13 is arranged to sandwich the spirally wound electrode body 20 in between from the upper and the lower sides, and to extend perpendicularly to the spirally wound periphery face.

At the open end of the battery can 11, a battery cover 14, a safety valve mechanism 15, and a PTC (Positive Temperature Coefficient) device 16 are attached by being caulked with a gasket 17. Thereby, inside of the battery can 11 is hermetically sealed. The battery cover 14 is made of, for example, a material similar to that of the battery can 11. The safety valve mechanism 15 and the PTC device 16 are provided inside of the battery cover 14. The safety valve mechanism 15 is electrically connected to the battery cover 14 through the PTC device 16. In the safety valve mechanism 15, in the case where the internal pressure becomes a certain level or more by internal short circuit, external heating or the like, a disk plate 15A flips to cut the electric connection between the battery cover 14 and the spirally wound electrode body 20. As temperature rises, the PTC device 16 increases the resistance (limits a current) to prevent abnormal heat generation resulting from a large current. The gasket 17 is made of, for example, an insulating material. The surface of the gasket 17 may be coated with, for example, asphalt.

In the spirally wound electrode body 20, the cathode 21 and the anode 22 are layered with a separator 23 in between and spirally wound as illustrated in FIG. 1 and FIG. 2. A center pin 24 may be inserted in the center of the spirally wound electrode body 20. A cathode lead 25 made of aluminum or the like is connected to the cathode 21, and an anode lead 26 made of nickel or the like is connected to the anode 22. The cathode lead 25 is electrically connected to the battery cover 14 by, for example, being welded to the safety valve mechanism 15. The anode lead 26 is, for example, welded and thereby electrically connected to the battery can 11. Cathode

In the cathode 21, for example, a cathode active material layer 21 B is provided on both faces of a cathode current collector 21 A. However, the cathode active material layer 21 B may be provided only on a single face of the cathode current collector 21 A. The cathode current collector 21 A is made of, for example, a metal material such as aluminum, nickel, and stainless. The cathode active material layer 21B contains, as a cathode active material, one or more cathode materials capable of inserting and extracting lithium ions. According to needs, the cathode active material layer 21 B may contain other material such as a cathode binder and a cathode electrical conductor.

As the cathode material, a lithium-containing compound is preferable, since thereby a high energy density is able to be obtained. Examples of lithium-containing compounds include a composite oxide containing lithium (Li) and a transition metal element as an element and a phosphate compound containing lithium and a transition metal element as an element. Specially, a compound containing at least one of cobalt (Co), nickel, manganese (Mn), and iron as a transition metal element is preferable, since thereby a higher voltage is obtained. The chemical formula thereof is expressed by, for example, LiₓM1O₂ or Li_{y}M2PO₄. In the formula, M1 and M2 represent one or more transition metal elements. Values of x and y vary according to the charge and discharge state, and are generally in the range of 0.05≤x≤1.10 and 0.05≤y≤1.10.

Examples of composite oxides containing lithium and a transition metal element include a lithium-cobalt composite oxide (LiₓCoO₂), a lithium-nickel composite oxide (LiₓNiO₂), and a lithium-nickel composite oxide expressed by Formula 1 shown below. X (halogen element) in Formula 1 represents at least one of fluorine (F), chlorine (Cl), bromine (Br), and iodine (I). Examples of phosphate compounds containing lithium and a transition metal element include lithium-iron phosphate compound (LiFePO₄) and a lithium-iron-manganese phosphate compound (LiFe₁₋ᵤMnᵤPO₄ (u<1)), since thereby a high battery capacity and superior cycle characteristics are obtained.

Formula 1

LiₐCo_{b}Ni_{c}M_{1-b-c}O_{d-e}Xₑ

In the formula, M is at least one of boron (B), magnesium (Mg), aluminum (Al), silicon (Si), phosphorus (P), sulfur (S), titanium (Ti), chromium (Cr), manganese (Mn), iron (Fe), copper (Cu), zinc (Zn), gallium (Ga), germanium (Ge), yttrium (Y), zirconium (Zr), molybdenum (Mo), silver (Ag), barium (Ba), tungsten (W), indium (In), tin (Sn), lead (Pb), and antimony (Sb). x is a halogen element. Each value range is as follows: 0.8<a<1.2, 0≤b≤0.5, 0.5≤c≤1.0, 1.8≤d≤2.2, and 0≤e≤1.0.

In addition, examples of cathode materials include an oxide, a disulfide, a chalcogenide, and a conductive polymer. Examples of oxides include titanium oxide, vanadium oxide, and manganese dioxide. Examples of disulfide include titanium disulfide and molybdenum sulfide. Examples of chalcogenide include niobium selenide. Examples of conductive polymers include sulfur, polyaniline, and polythiophene.

It is needless to say that two or more of the foregoing cathode materials may be used by mixture arbitrarily. Further, the cathode material may be a material other than the foregoing compounds.

Examples of cathode binders include a synthetic rubber and a polymer material. Examples of synthetic rubber include styrene butadiene rubber, fluorinated rubber, and ethylene propylene diene. Examples of polymer materials include polyvinylidene fluoride. One thereof may be used singly, or a plurality thereof may be used by mixture.

Examples of cathode electrical conductors include a carbon material such as graphite, carbon black, acetylene black, and Ketjen black. Such a carbon material may be used singly, or a plurality thereof may be used by mixture. The cathode electrical conductor may be a metal material, a conductive polymer or the like as long as the material has the electric conductivity.

Anode

In the anode 22, an anode active material layer 22B is provided on both faces of an anode current collector 22A. However, the anode active material layer 22B may be provided only on a single face of the anode current collector 22A. The anode 22 has a coat composed of at least one of metal barium and a barium compound described later. In this case, the anode 22 has an anode active material layer coating film 22C as the foregoing coat on the anode active material layer 22B. The anode active material layer coating film 22C may be provided only on a single face of the anode current collector 22A, or may be provided on both faces thereof as the anode active material layer 22B is.

The anode current collector 22A is made of, for example, a metal material such as copper, nickel, and stainless. The surface of the anode current collector 22A is preferably roughened. Thereby, due to so-called anchor effect, the contact characteristics between the anode current collector 22A and the anode active material layer 22B are improved. In this case, it is enough that at least the surface of the anode current collector 22A opposed to the anode active material layer 22B is roughened. Examples of roughening methods include a method of forming fine particles by electrolytic treatment. The electrolytic treatment is a method of providing concavity and convexity by forming fine particles on the surface of the anode current collector 22A by using electrolytic method in an electrolytic bath. A copper foil formed by electrolytic method is generally called "electrolytic copper foil."

The anode active material layer 22B contains one or more anode materials capable of inserting and extracting lithium ions as an anode active material, and may also contain other material such as an anode binder and an anode electrical conductor according to needs. Details of the anode binder and the anode electrical conductor are, for example, respectively similar to those of the cathode binder and the cathode electrical conductor. In the anode active material layer 22B, the chargeable capacity of the anode material is preferably larger than the discharge capacity of the cathode 21 in order to prevent, for example, unintentional precipitation of metal lithium at the time of charge and discharge.

Examples of anode materials include a carbon material. In the carbon material, crystal structure change associated with insertion and extraction of lithium ions is extremely small. Thus, the carbon material provides a high energy density and superior cycle characteristics, and functions as an anode electrical conductor as well. Examples of carbon materials include graphitizable carbon, non-graphitizable carbon in which the spacing of (002) plane is 0.37 nm or more, and graphite in which the spacing of (002) plane is 0.34 nm or less. More specifically, examples of carbon materials include pyrolytic carbon, coke, glassy carbon fiber, an organic polymer compound fired body, activated carbon, and carbon black. Of the foregoing, the coke includes pitch coke, needle coke, and petroleum coke. The organic polymer compound fired body is obtained by firing and carbonizing a phenol resin, a furan resin or the like at an appropriate temperature. The shape of the carbon material may be any of a fibrous shape, a spherical shape, a granular shape, and a scale-like shape.

Examples of anode materials include a material (metal material) containing at least one of metal elements and metalloid elements as an element. Such an anode material is preferably used, since a high energy density is able to be thereby obtained. Such a metal material may be a simple substance, an alloy, or a compound of a metal element or a metalloid element, may be two or more thereof, or may have one or more phases thereof at least in part. In the invention, "alloy" includes an alloy containing one or more metal elements and one or more metalloid elements, in addition to an alloy composed of two or more metal elements. Further, "alloy" may contain a nonmetallic element. The texture thereof includes a solid solution, a eutectic crystal (eutectic mixture), an intermetallic compound, and a texture in which two or more thereof coexist.

The foregoing metal element or the foregoing metalloid element is a metal element or a metalloid element capable of forming an alloy with lithium. Specifically, the foregoing metal element or the foregoing metalloid element is at least one of magnesium, boron, aluminum, gallium, indium (In), silicon, germanium (Ge), tin, lead (Pb), bismuth (Bi), cadmium (Cd), silver (Ag), zinc, hafnium (Hf), zirconium, yttrium, palladium (Pd), and platinum (Pt). Specially, at least one of silicon and tin is preferably used. Silicon and tin have the high ability to insert and extract lithium ion, and thus are able to provide a high energy density.

A material containing at least one of silicon and tin may be, for example, a simple substance, an alloy, or a compound of silicon or tin; two or more thereof; or a material having one or more phases thereof at least in part.

Examples of alloys of silicon include an alloy containing at least one of the following elements as an element other than silicon. Such an element other than silicon is tin, nickel, copper, iron, cobalt, manganese, zinc, indium, silver, titanium, germanium, bismuth, antimony, and chromium. Examples of compounds of silicon include a compound containing oxygen or carbon as an element other than silicon. The compounds of silicon may contain one or more of the elements described for the alloys of silicon as an element other than silicon.

Examples of an alloy or a compound of silicon include SiB₄, SiB₆, Mg₂Si, Ni₂Si, TiSi₂, MoSi₂, CoSi₂, NiSi₂, CaSi₂, CrSi₂, and Cu₅Si. Further, examples thereof include FeSi₂, MnSi₂, NbSi₂, TaSi₂, VSi₂, WSi₂, ZnSi₂, SiC, Si₃N₄, Si₂N₂O, SiOᵥ (0<v≤2), SnO_{w} (0<w≤2), and LiSiO.

Examples of alloys of tin include an alloy containing at least one of the following elements as an element other than tin. Such an element is silicon, nickel, copper, iron, cobalt, manganese, zinc, indium, silver, titanium, germanium, bismuth, antimony, or chromium. Examples of compounds of tin include a compound containing oxygen or carbon. The compounds of tin may contain one or more elements described for the alloys of tin as an element other than tin. Examples of alloys or compounds of tin include SnSiO₃, LiSnO, and Mg₂Sn.

In particular, as a material containing silicon (silicon-containing material), the simple substance of silicon is preferable, since a high battery capacity, superior cycle characteristics and the like are thereby obtained. "Simple substance" only means a general simple substance (may contain a slight amount of impurity), but does not necessarily mean a substance with purity of 100%.

Further, as a material containing tin (tin-containing material), for example, a material containing a second element and a third element in addition to tin as a first element is preferable. The second element is, for example, at least one of cobalt, iron, magnesium, titanium, vanadium, chromium, manganese, nickel, copper, zinc, gallium, zirconium, niobium, molybdenum, silver, indium, cerium (Ce), hafnium, tantalum, tungsten, bismuth, and silicon. The third element is, for example, at least one of boron, carbon, aluminum, and phosphorus. In this case, a high battery capacity, superior cycle characteristics and the like are obtained.

Specially, a material containing tin, cobalt, and carbon as an element (SnCoC-containing material) is preferable. As the composition of the SnCoC-containing material, for example, the carbon content is from 9.9 wt% to 29.7 wt% both inclusive, and the ratio of tin and cobalt contents (Co/(Sn+Co)) is from 20 wt% to 70 wt% both inclusive, since a high energy density is obtained in such a composition range.

It is preferable that the SnCoC-containing material has a phase containing tin, cobalt, and carbon. Such a phase preferably has a low crystalline structure or an amorphous structure. The phase is a phase capable of being reacted with lithium (reaction layer). Due to existence of the reaction phase, superior characteristics are able to be obtained. The half-width of the diffraction peak obtained by X-ray diffraction of the reaction phase is preferably 1.0 deg or more based on diffraction angle of 20 in the case where CuKα ray is used as a specific X ray, and the trace speed is 1 deg/min. Thereby, lithium ions are smoothly inserted and extracted, and reactivity with the electrolyte or the like is decreased. In some cases, the SnCoC-containing material has a phase containing a simple substance or part of the respective elements in addition to the low crystalline or amorphous phase.

Whether or not the diffraction peak obtained by X-ray diffraction corresponds to the reaction phase capable of being reacted with lithium is able to be easily determined by comparison between X-ray diffraction charts before and after electrochemical reaction with lithium. For example, if the position of the diffraction peak after electrochemical reaction with lithium is changed from the position of the diffraction peak before electrochemical reaction with lithium, the obtained diffraction peak corresponds to the reaction phase capable of being reacted with lithium. In this case, for example, the diffraction peak of the reaction phase is shown in the range of 2θ=from 20 to 50 deg both inclusive. Such a reaction phase contains the foregoing element, and the low crystalline or amorphous structure may result from existence of carbon mainly.

In the SnCoC-containing material, at least part of carbon as an element is preferably bonded to a metal element or a metalloid element as other element, since thereby cohesion or crystallization of tin or the like is inhibited. The bonding state of elements is able to be checked by, for example, X-ray Photoelectron Spectroscopy (XPS). In a commercially available apparatus, for example, as a soft X ray, Al-Kα ray, Mg-Kα ray or the like is used. In the case where at least part of carbon is bonded to a metal element, a metalloid element or the like, the peak of a synthetic wave of 1s orbit of carbon (C1s) is observed in a region lower than 284.5 eV. In the apparatus, energy calibration is made so that the peak of 4f orbit of gold atom (Au4f) is obtained in 84.0 eV. At this time, in general, since surface contamination carbon exists on the material surface, the peak of C1s of the surface contamination carbon is regarded as 284.8 eV, which is used as the energy reference. In XPS, the waveform of the peak of C1s is measured as a form including the peak of the surface contamination carbon and the peak of carbon in the SnCoC-containing material. Thus, for example, analysis is made by using commercially available software to isolate both peaks from each other. In the waveform analysis, the position of a main peak existing on the lowest bond energy side is the energy reference (284.8 eV).

The SnCoC-containing material may further contain at least one of the following elements according to needs. Examples of the elements include silicon, iron, nickel, chromium, indium, niobium, germanium, titanium, molybdenum, aluminum, phosphorus, gallium, and bismuth.

In addition to the SnCoC-containing material, a material containing tin, cobalt, iron, and carbon (SnCoFeC-containing material) as a tin-containing material is also preferable. The composition of the SnCoFeC-containing material is able to be arbitrarily set. For example, a composition in which the iron content is set small is as follows. That is, the carbon content is from 9.9 wt% to 29.7 wt% both inclusive, the iron content is from 0.3 wt% to 5.9 wt% both inclusive, and the ratio of contents of tin and cobalt (Co/(Sn+Co)) is from 30 wt% to 70 wt% both inclusive. Further, for example, a composition in which the iron content is set large is as follows. That is, the carbon content is from 11.9 wt% to 29.7 wt% both inclusive, the ratio of contents of tin, cobalt, and iron ((Co+Fe)/(Sn+Co+Fe)) is from 26.4 wt% to 48.5 wt% both inclusive, and the ratio of contents of cobalt and iron (Co/(Co+Fe)) is from 9.9 wt% to 79.5 wt% both inclusive. In such a composition range, a high energy density is obtained. The physical property and the like (half-width or the like) of the SnCoFeC-containing material are similar to those of the SnCoC-containing material.

Further, examples of other anode materials include a metal oxide and a polymer compound. The metal oxide is, for example, iron oxide, ruthenium oxide, molybdenum oxide or the like. The polymer compound is, for example, polyacetylene, polyaniline, polypyrrole or the like.

It is needless to say that two or more of the foregoing anode materials may be used by mixture arbitrarily. Further, the anode material may be a material other than the foregoing materials.

The anode active material layer 22B is formed by, for example, coating method, vapor-phase deposition method, liquid-phase deposition method, spraying method, firing method (sintering method), or a combination of two or more of these methods. Coating method is a method in which, for example, an anode active material is mixed with a binder or the like, and then the mixture is dispersed in a solvent. Examples of vapor-phase deposition methods include physical deposition method and chemical deposition method. Specifically, examples thereof include vacuum evaporation method, sputtering method, ion plating method, laser ablation method, thermal CVD (Chemical Vapor Deposition) method, and plasma CVD method. Examples of liquid-phase deposition methods include electrolytic plating method and electroless plating method. Spraying method is a method in which the anode active material is sprayed in a fused state or a semi-fused state. Firing method is, for example, a method in which after the anode current collector is coated by a procedure similar to that of coating method, heat treatment is provided at a temperature higher than the melting point of the anode binder or the like. Examples of firing methods include a known technique such as atmosphere firing method, reactive firing method, and hot press firing method.

The anode active material layer coating film 22C is previously provided on the anode active material layer 22B before charge and discharge. The anode active material layer coating film 22C is composed of at least one of metal barium and barium compounds (hereinafter collectively referred to as "metal barium or the like"). That is, component materials of the anode active material layer coating film 22C may be one or more of the barium compounds, may be only metal barium, or may be a mixture thereof. Thus, chemical stability of the anode 22 is improved, and thus reactivity is decreased. Thereby, decomposition reaction of the electrolytic solution at the time of charge and discharge is inhibited. The anode active material layer coating film 22C may have a single layer structure or may have a multilayer structure. Further, for the metal barium or the like, a plurality of materials may be mixed in one layer, or each different material may be used for each layer in the case of the multilayer structure. The same is applied to an after-mentioned anode active material particle coating film 222 (refer to FIG. 4).

Examples of barium compounds include barium oxide, barium hydroxide, barium halide, barium sulfate, barium nitrate, barium phosphate, and organic acid barium salt. Specially, barium halide and barium phosphate are preferable, since thereby the chemical stability of the anode 22 is more improved. Though halogen type in barium halide is not particularly limited, barium fluoride is specially preferable. Examples of organic acid barium salt include barium carbonate, barium oxalate, and barium acetate.

Specially, the anode active material layer coating film 22C is preferably composed of metal barium. Thereby, the stable and rigid anode active material layer coating film 22C is formed. Accordingly, chemical stability of the anode 22 is more improved than in a case that the anode active material layer coating film 22C contains a barium compound.

The entire surface of the anode active material layer 22B may be coated with the anode active material layer coating film 22C, or part of the anode active material layer 22B may be coated with the anode active material layer coating film 22C. However, the coating range is preferably as large as as possible, since thereby stability of the anode 22 is further improved. At this time, part of the anode active material layer coating film 22C may enter into the anode active material layer 22B.

Further, the anode active material layer coating film 22C is formed by, for example, liquid-phase deposition method, vapor-phase deposition method or the like. The liquid-phase deposition method is, for example, coating method, dipping method (so-called dip coating method) or the like. Vapor-phase deposition method is, for example, resistance heating method, evaporation method, sputtering method, Chemical Vapor Deposition (CVD) method or the like. A single method thereof may be used, or two or more methods thereof may be used.

Specially, in the case where metal barium is used, vapor-phase deposition method is preferably used, since thereby the anode active material layer coating film 22C is able to be easily formed in a short time. Meanwhile, in the case where a barium compound is used, liquid-phase deposition method using a solution into which the barium compound is dissolved (hereinafter referred to as "coat formation solution") is preferable, since thereby the anode active material layer coating film 22C with superior chemical stability is able to be easily formed. The solvent of the coat formation solution is not particularly limited, but water is specially preferable, since water has high polarity and easily dissolves the barium compound. Further, in this case, the water system anode active material layer coating film 22C is formed, and thus the anode active material layer coating film 22C is less likely to be dissolved in the case where water is used in combination with a nonaqueous solvent system electrolytic solution.

In the anode 22, peak attribute to Ba3d5/2 is obtained in the range from 778 eV to 782 eV both inclusive by, for example, surface analysis of the anode 22 using XPS due to existence of the anode active material layer coating film 22C. Further, for example, at least one peak of Ba⁺, BaOH⁺, BaF⁺, BaOLi⁺, BaOHFLi⁺, BaF₂Li⁺, BaOLi₂F⁺, BaO₂Li₃⁺, BaOHLi₂F₂⁺, BaLi₂F₃⁺, BaCO₃Li⁺, BaSO₄Li⁺, and BaLi₂PO₄⁺ is obtained as a positive secondary ion by surface analysis of the anode 22 using time of flight secondary ion mass spectrometry (TOF-SIMS). By the foregoing analyses, presence of the anode active material layer coating film 22C is able to be easily checked.

In the cathode 21 and the anode 22, for example, as illustrated in FIG. 3, the cathode active material layer 21B is provided on a partial region of the cathode current collector 21A, while the anode active material layer 22B and the anode active material layer coating film 22C are provided on the whole area of the anode current collector 22A. Thus, the anode active material layer 22B and the anode active material layer coating film 22C are provided on both region R1 opposed to the cathode active material layer 21 B and in region R2 not opposed to the cathode active material layer 21B. In FIG. 3, the cathode active material layer 21B and the anode active material layer 22B are shaded.

Separator

The separator 23 separates the cathode 21 from the anode 22, and passes lithium ions while preventing current short circuit resulting from contact of both electrodes. The separator 23 is made of, for example, a porous film composed of a synthetic resin porous film, a ceramic porous film or the like. The separator 23 may be a laminated body composed of two or more porous films. Examples of synthetic resin include polytetrafluoroethylene, polypropylene, and polyethylene.

Electrolytic solution

An electrolytic solution as a liquid electrolyte is impregnated in the separator 23. In the electrolytic solution, an electrolyte salt is dissolved in a solvent. The electrolytic solution may contain other material such as various additives according to needs.

The solvent contains, for example, one or more nonaqueous solvents such as an organic solvent. Solvents (nonaqueous solvent) described below may be used singly, or two or more thereof may be used by mixture.

Examples of nonaqueous solvents include ethylene carbonate, propylene carbonate, butylene carbonate, dimethyl carbonate, diethyl carbonate, ethyl methyl carbonate, methylpropyl carbonate, γ-butyrolactone, γ-valerolactone, 1,2-dimethoxyethane, and tetrahydrofuran. Further examples thereof include 2-methyltetrahydrofuran, tetrahydropyran, 1,3-dioxolane, 4-methyl-1,3-dioxolane, 1,3-dioxane, and 1,4-dioxane. Furthermore, examples thereof include methyl acetate, ethyl acetate, methyl propionate, ethyl propionate, methyl butyrate, methyl isobutyrate, trimethyl methyl acetate, and trimethyl ethyl acetate. Furthermore, examples thereof include acetonitrile, glutaronitrile, adiponitrile, methoxyacetonitrile, 3-methoxypropionitrile, N,N-dimethylformamide, N-methylpyrrolidinone, and N-methyloxazolidinone. Furthermore, examples thereof include N,N'-dimethylimidazolidinone, nitromethane, nitroethane, sulfolane, trimethyl phosphate, and dimethyl sulfoxide. Thereby, a superior battery capacity, superior cycle characteristics, superior storage characteristics and the like are obtained.

Specially, at least one of ethylene carbonate, propylene carbonate, dimethyl carbonate, diethyl carbonate, and ethyl methyl carbonate is preferable, since thereby a superior battery capacity, superior cycle characteristics, superior storage characteristics and the like are obtained. In this case, a combination of a high viscosity (high dielectric constant) solvent (for example, specific inductive ε≥30) such as ethylene carbonate and propylene carbonate and a low viscosity solvent (for example, viscosity≤1 mPa•s) such as dimethyl carbonate, ethylmethyl carbonate, and diethyl carbonate is more preferable. Thereby, dissociation property of the electrolyte salt and ion mobility are improved.

In particular, the solvent preferably contains at least one of halogenated chain ester carbonate and halogenated cyclic ester carbonate. Thereby, a stable protective film is formed on the surface of the anode 22 at the time of charge and discharge, and thus decomposition reaction of the electrolytic solution is inhibited. The foregoing "halogenated" means that at least part of hydrogen is substituted with halogen. Examples of halogenated chain ester carbonates include fluoromethyl methyl carbonate, bis(fluoromethyl) carbonate, and difluoromethyl methyl carbonate. Examples of halogenated cyclic ester carbonates include 4-fluoro-1,3-dioxolane-2-one and 4,5-difluoro-1,3-dioxolane-2-one. Examples of halogenated cyclic ester carbonates include a geometric isomer. The content of the halogenated chain ester carbonates and the halogenated cyclic ester carbonates (single use or a mixture) is, for example, from 0.01 wt% to 50 wt% both inclusive.

The solvent preferably contains unsaturated carbon bond cyclic ester carbonate. Thereby, a stable protective film is formed on the surface of the anode 22 at the time of charge and discharge, and thus decomposition reaction of the electrolytic solution is inhibited. Examples of unsaturated carbon bond cyclic ester carbonates include vinylene carbonate and vinylethylene carbonate. The content thereof in the solvent is, for example, from 0.01 wt% to 10 wt% both inclusive.

Further, the solvent preferably contains sultone (cyclic sulfonic ester) or an acid anhydride since the chemical stability of the electrolytic solution is thereby improved. Examples of sultone include propane sultone and propene sultone. The sultone content in the solvent is preferably, for example, from 0.5 wt% to 5 wt% both inclusive. Examples of acid anhydrides include a carboxylic anhydride, a disulfonic anhydride, and a carboxylic sulfonic anhydride. Examples of carboxylic anhydrides include succinic anhydride, glutaric anhydride, and maleic anhydride. Examples of disulfonic anhydrides include ethane disulfonic anhydride and propane disulfonic anhydride. Examples of carboxylic sulfonic anhydrides include sulfobenzoic anhydride, sulfopropionic anhydride, and sulfobutyric anhydride. The content of acid anhydride in the solvent is preferably, for example, from 0.5 wt% to 5 wt% both inclusive.

The electrolyte salt contains, for example, one or more light metal salts such as a lithium salt. Electrolyte salts described below may be used singly, or two or more thereof may be used by mixture.

Examples of lithium salts include lithium hexafluorophosphate (LiPF₆), lithium tetrafluoroborate (LiBF₄), lithium perchlorate (LiClO₄), and lithium hexafluoroarsenate (LiAsF₆). Further, examples thereof include lithium tetraphenylborate (LiB(C₆H₅)₄), lithium methanesulfonate (LiCH₃SO₃), lithium trifluoromethane sulfonate (LiCF₃SO₃), and lithium tetrachloroaluminate (LiAlCl₄). Further, examples thereof include dilithium hexafluorosilicate (Li₂SiF₆), lithium chloride (LiCI), and lithium bromide (LiBr). Thereby, a superior battery capacity, superior cycle characteristics, superior storage characteristics and the like are obtained.

Specially, at least one of lithium hexafluorophosphate, lithium tetrafluoroborate, lithium perchlorate, and lithium hexafluoroarsenate is preferable. In this case, further, at least one of lithium hexafluorophosphate and lithium tetrafluoroborate is more preferable, and lithium hexafluorophosphate is much more preferable. Thereby, internal resistance is lowered, and thus higher effect is obtained.

The content of the electrolyte salt is preferably from 0.3 mol/kg to 3.0 mol/kg both inclusive to the solvent. Thereby, high ion conductivity is able to be obtained.

Operation of the secondary battery

In the secondary battery, at the time of charge and discharge, for example, lithium ions are inserted and extracted as described below. At the time of charge, lithium ions are extracted from the cathode 21, and are inserted in the anode 22 through the electrolytic solution impregnated in the separator 23. Meanwhile, at the time of discharge, lithium ions are extracted from the anode 22, and are inserted in the cathode 21 through the electrolytic solution impregnated in the separator 23.

Method of manufacturing the secondary battery

The secondary battery is manufactured, for example, by the following procedure.

First, the cathode 21 is formed. First, a cathode active material is mixed with a cathode binder, a cathode electrical conductor or the like according to needs to prepare a cathode mixture, which is subsequently dispersed in an organic solvent to obtain paste cathode mixture slurry. Subsequently, both faces of the cathode current collector 21 A are coated with the cathode mixture slurry to form the cathode active material layer 21B. Finally, the cathode active material layer 21B is compression-molded by using a rolling press machine or the like while being heated if necessary. In this case, the resultant may be compression-molded over several times.

Next, the anode 22 is formed. First, the anode active material layer 22B is formed on both faces of the anode current collector 22A. The anode active material layer 22B may be formed by a procedure similar to that of the foregoing cathode 21. In this case, an anode active material is mixed with an anode binder, an anode electrical conductor or the like according to needs to prepare an anode mixture, which is subsequently dispersed in an organic solvent to form paste anode mixture slurry. After that, both faces of the anode current collector 22A are coated with the anode mixture slurry. The resultant is compression-molded according to needs. Otherwise, the anode 22 may be formed by a procedure different from that of the cathode 21. In this case, the anode material is deposited on both faces of the anode current collector 22A by using vapor-phase deposition method such as evaporation method. Finally, the anode active material layer coating film 22C is formed on the anode active material layer 22B. In the case where a barium compound is used as a formation material of the anode active material layer coating film 22C, a coat formation solution into which the barium compound is dissolved is prepared. The anode current collector 22A on which the anode active material layer 22B is formed is dipped into the coat formation solution for several seconds, pulled out, and dried. Otherwise, the surface of the anode active material layer 22B may be coated with the coat formation solution. Meanwhile, in the case where metal barium is used as a formation material of the anode active material layer coating film 22C, barium is deposited on the surface of the anode active material layer 22B by using resistance heating method.

Finally, the secondary battery is assembled by using an electrolytic solution together with the cathode 21 and the anode 22. First, the cathode lead 25 is attached to the cathode current collector 21A by welding or the like, and the anode lead 26 is attached to the anode current collector 22A by welding or the like. Subsequently, the cathode 21 and the anode 22 are layered with the separator 23 in between and spirally wound, and thereby the spirally wound electrode body 20 is formed. After that, the center pin 24 is inserted in the center of the spirally wound electrode body. Subsequently, the spirally wound electrode body 20 is sandwiched between the pair of insulating plates 12 and 13, and contained in the battery can 11. In this case, the end of the cathode lead 25 is attached to the safety valve mechanism 15 by welding or the like, and the end of the anode lead 26 is attached to the battery can 11 by welding or the like. Subsequently, the electrolytic solution is injected into the battery can 11 and impregnated in the separator 23. Finally, at the open end of the battery can 11, the battery cover 14, the safety valve mechanism 15, and the PTC device 16 are fixed by being caulked with the gasket 17. The secondary battery illustrated in FIG. 1 to FIG. 3 is thereby completed.

According to the cylinder type secondary battery of this embodiment, the anode active material layer coating film 22C composed of metal barium or the like is provided on the anode active material layer 22B. Thus, chemical stability of the anode 22 is improved. Since reactivity of the anode 22 is thereby decreased, decomposition reaction of the electrolytic solution is inhibited at the time of charge and discharge. Accordingly, cycle characteristics are able to be improved. In this case, since superior cycle characteristics are obtained in the case where a metal material advantageous for realizing a high capacity as an anode material, high effect is able to be obtained more than in a case that a carbon material is used.

In particular, as will be described later, since the anode active material layer coating film 22C is previously provided on the anode active material layer 22B before charge and discharge, fixable characteristics, stability and the like of the anode active material layer coating film 22C are more improved than in a case that the anode active material layer coating film 22C is provided on the anode active material layer 22B at the time of charge and discharge. Thus, cycle characteristics are able to be further improved. Further, in the case where an aqueous solution is used as a coat formation solution, solubility resistance of the anode active material layer coating film 22C is improved if the aqueous solution is used in combination with a nonaqueous solvent system electrolytic solution. Accordingly, cycle characteristics are able to be further improved.

A description will be given of characteristics of the secondary battery in the case that the anode active material layer coating film 22C is previously provided on the anode active material layer 22B. As illustrated in FIG. 3, at the time of completing the anode 22 (before charge and discharge), the anode active material layer coating film 22C is already formed. Thus, the anode active material layer coating film 22C exists not only in the region R1 but also in the region R2. The region R1 where the cathode active material layer 21 B is opposed to the anode active material layer 22B is involved in charge and discharge reaction. Thus, the anode active material layer coating film 22C formed in the region R1 may be, for example, decomposed by being influenced by charge and discharge reaction. However, the region R2 where the cathode active material layer 21 B is not opposed to the anode active material layer 22B is not involved in charge and discharge reaction. Thus, the anode active material layer coating film 22C formed in the region R2 should remain free of influence from charge and discharge. Thus, to check whether or not the anode active material layer coating film 22C is previously formed before charging and discharging the secondary battery, it is enough to examine whether or not the anode active material layer coating film 22C exists in the region R2. If the anode active material layer coating film 22C exists in the region R2 after charge and discharge, it means that the anode active material layer coating film 22C is previously formed before charge and discharge.

1-1-2. Anode active material particle coating film

Instead of providing the anode active material layer coating film 22C as a coat, a plurality of particulate anode active materials (anode active material particles 221) covered with an anode active material particle coating film 222 as other coat may be used as illustrated in FIG. 4. The anode active material particle coating film 222 contains metal barium or the like as the anode active material layer coating film 22C does. For forming the anode active material particle 221 covered with the active material particle coating film 222, for example, the anode active material particle 221 is dipped in a coat formation solution for several seconds, pulled out, and dried. The rest of procedures of forming the anode 22 is similar to the procedures of forming the anode active material layer coating film 22C. In this case, for the reason similar to that in the case of providing the anode active material layer coating film 22C, chemical stability of the anode 22 is improved, and thus cycle characteristics are able to be improved.

It is needless to say that only the anode active material layer coating film 22C may be used, or only the anode active material particles 221 covered with the anode active material particle coating film 222 may be used. Otherwise, both the anode active material layer coating film 22C and the anode active material particles 221 covered with the anode active material particle coating film 222 may be used. If both are used, chemical stability of the anode 22 is significantly improved, and thus cycle characteristics are able to be further improved.

1-2. Laminated film type secondary battery

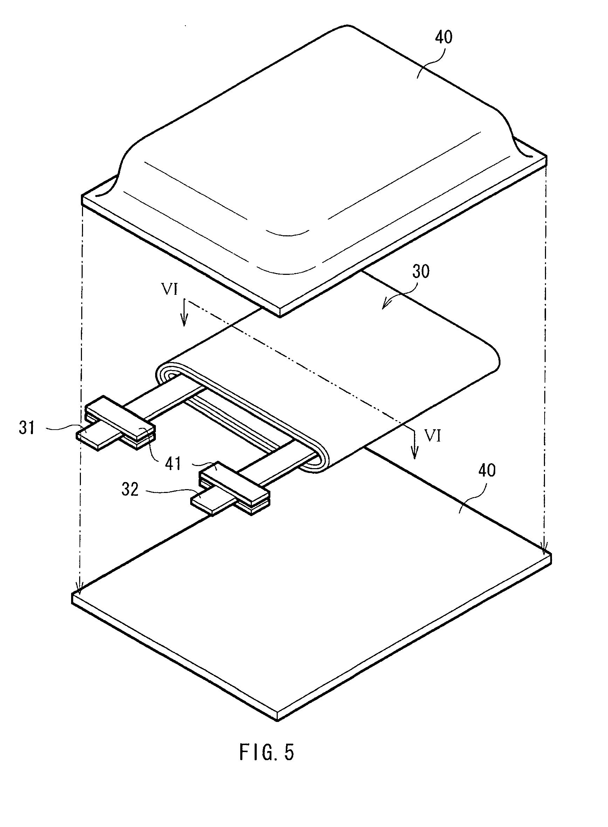

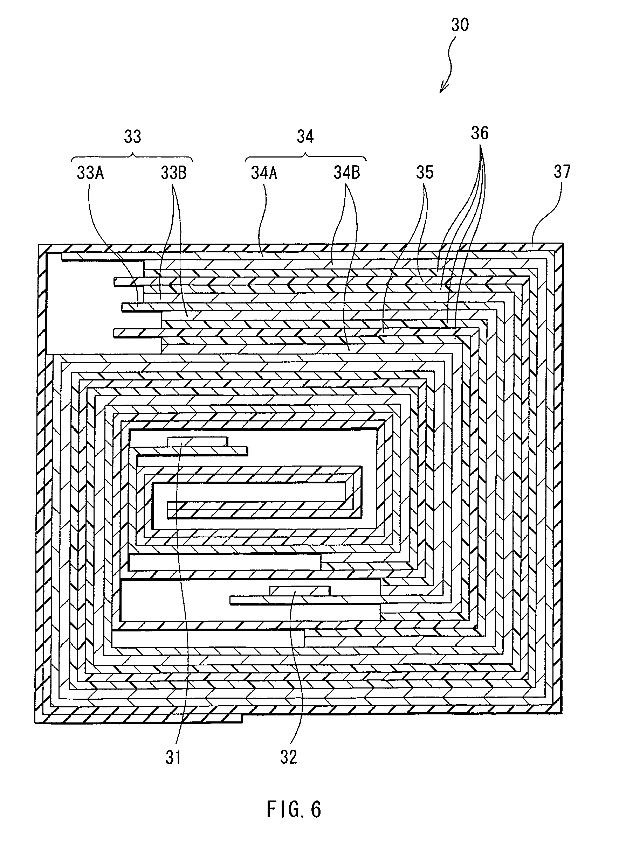

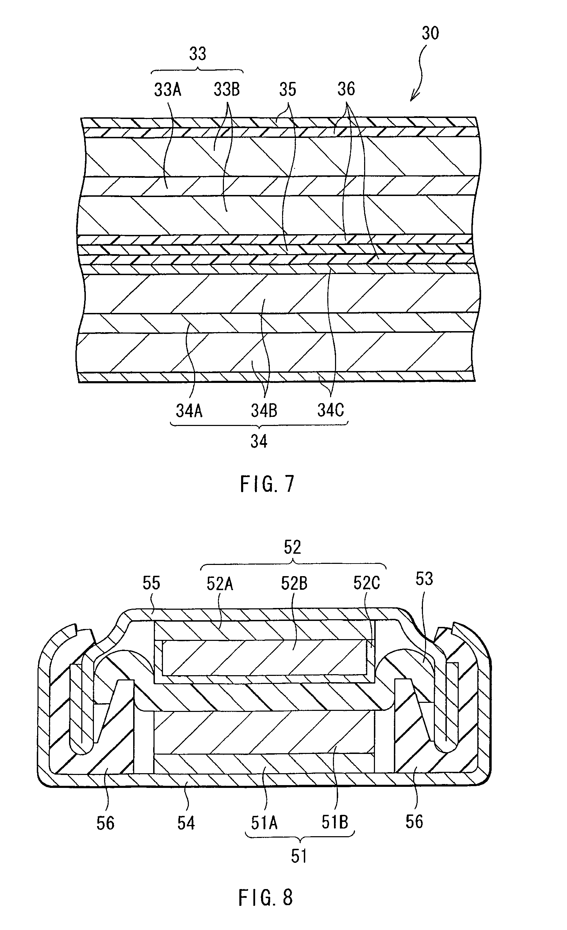

The secondary battery of this embodiment may be applied to a secondary battery other than the cylinder type secondary battery. FIG. 5 illustrates an exploded perspective structure of a laminated film type secondary battery. FIG. 6 illustrates an exploded cross section taken along line VI-VI of a spirally wound electrode body 30 illustrated in FIG. 5. FIG. 7 respectively illustrates a planar structure of a cathode 33 and an anode 34 illustrated in FIG. 6. A description will be given of elements of the laminated film type secondary battery with reference to the elements of the cylinder type secondary battery as appropriate.

The secondary battery is a lithium ion secondary battery in which the spirally wound electrode body 30 is mainly contained in a film package member 40, for example. A cathode lead 31 and an anode lead 32 are attached to the spirally wound electrode body 30.

The cathode lead 31 and the anode lead 32 are, for example, respectively derived from inside to outside of the package member 40 in the same direction. The cathode lead 31 is made of, for example, a metal material such as aluminum. The anode lead 32 is made of, for example, a metal material such as copper, nickel, and stainless. These materials are in the shape of, for example, a thin plate or mesh.

The package member 40 is made of a laminated film in which, for example, a fusion bonding layer, a metal layer, and a surface protective layer are layered in this order. In the laminated film, for example, the respective outer edges of the fusion bonding layer of two films are bonded to each other by fusion bonding, an adhesive or the like so that the fusion bonding layer and the spirally wound electrode body 30 are opposed to each other. Examples of fusion bonding layers include a polymer film made of polyethylene, polypropylene or the like. Examples of metal layers include a metal foil such as an aluminum foil. Examples of surface protective layers include a polymer film made of nylon, polyethylene terephthalate or the like.

Specially, as the package member 40, an aluminum laminated film in which a polyethylene film, an aluminum foil, and a nylon film are layered in this order is preferable. However, the package member 40 may be made of a laminated film having other laminated structure, a polymer film such as polypropylene, or a metal film, instead of the aluminum laminated film.

An adhesive film 41 to protect from entering of outside air is inserted between the package member 40 and the cathode lead 31/the anode lead 32. The adhesive film 41 is made of a material having contact characteristics with respect to the cathode lead 31 and the anode lead 32. Examples of such a material include, for example, a polyolefin resin such as polyethylene, polypropylene, modified polyethylene, and modified polypropylene.

In the spirally wound electrode body 30, a cathode 33 and an anode 34 are layered with a separator 35 and an electrolyte layer 36 in between and spirally wound. The outermost periphery thereof is protected by a protective tape 37. The cathode 33 has a structure in which, for example, a cathode active material layer 33B is provided on both faces of a cathode current collector 33A. The structures of the cathode current collector 33A and the cathode active material layer 33B are respectively similar to those of the cathode current collector 21A and the cathode active material layer 21B. The anode 34 has a structure in which, for example, an anode active material layer 34B and an anode active material layer coating film 34C are provided on both faces of an anode current collector 34A. The structures of the anode current collector 34A, the anode active material layer 34B, and the anode active material layer coating film 34C are respectively similar to the structures of the anode current collector 22A, the anode active material layer 22B, and the anode active material layer coating film 22C. The structure of the separator 35 is similar to the structure of the separator 23.

In the electrolyte layer 36, an electrolytic solution is held by a polymer compound, and other material such as various additives may be contained according to needs. The electrolyte layer 36 is a so-called gel electrolyte. The gel electrolyte is preferable, since high ion conductivity (for example, 1 mS/cm or more at room temperature) is obtained and liquid leakage of the electrolytic solution is prevented.

Examples of polymer compounds include at least one of polyacrylonitrile, polyvinylidene fluoride, polytetrafluoroethylene, polyhexafluoropropylene, polyethylene oxide, polypropylene oxide, polyphosphazene, polysiloxane, and polyvinyl fluoride. Further, examples thereof include polyvinyl acetate, polyvinyl alcohol, polymethylmethacrylate, polyacrylic acid, polymethacrylic acid, styrene-butadiene rubber, nitrile-butadiene rubber, polystyrene, and polycarbonate. Further, examples thereof include a copolymer of vinylidene fluoride and hexafluoropropylene. One of these polymer compounds may be used singly, or a plurality thereof may be used by mixture. Specially, polyvinylidene fluoride or the copolymer of vinylidene fluoride and hexafluoropropylene is preferable, since such a polymer compound is electrochemically stable.

The composition of the electrolytic solution is similar to the composition of the electrolytic solution in the cylinder type secondary battery. However, in the electrolyte layer 36 as the gel electrolyte, a solvent means a wide concept including not only the liquid solvent but also a solvent having ion conductivity capable of dissociating the electrolyte salt. Therefore, in the case where the polymer compound having ion conductivity is used, the polymer compound is also included in the solvent.

[0116] Instead of the gel electrolyte layer 36 in which the electrolytic solution is held by the polymer compound, the electrolytic solution may be directly used. In this case, the electrolytic solution is impregnated in the separator 35.

In the secondary battery, at the time of charge, for example, lithium ions are extracted from the cathode 33, and are inserted in the anode 34 through the electrolyte layer 36. Meanwhile, at the time of discharge, for example, lithium ions are extracted from the anode 34, and are inserted in the cathode 33 through the electrolyte layer 36.

The secondary battery including the gel electrolyte layer 36 is manufactured, for example, by the following three procedures.

In the first manufacturing method, first, the cathode 33 and the anode 34 are formed by a procedure similar to that of the cathode 21 and the anode 22. Specifically, the cathode 33 is formed by forming the cathode active material layer 33B on both faces of the cathode current collector 33A, and the anode 34 is formed by forming the anode active material layer 34B and the anode active material layer coating film 34C on both faces of the anode current collector 34A. Subsequently, a precursor solution containing an electrolytic solution, a polymer compound, and a solvent is prepared. After the cathode 33 and the anode 34 are coated with the precursor solution, the solvent is volatilized to form the gel electrolyte layer 36. Subsequently, the cathode lead 31 is connected to the cathode current collector 33A, and the anode lead 32 is connected to the anode current collector 34A. Subsequently, the cathode 33 and the anode 34 provided with the electrolyte layer 36 are layered with the separator 35 in between and spirally wound to obtain a laminated body. After that, the protective tape 37 is adhered to the outermost periphery thereof to form the spirally wound electrode body 30. Finally, after the spirally wound electrode body 30 is sandwiched between two pieces of film-like package members 40, outer edges of the package members 40 are adhered by thermal fusion bonding or the like to enclose the spirally wound electrode body 30. At this time, the adhesive films 41 are inserted between the cathode lead 31/the anode lead 32 and the package member 40. Thereby, the secondary battery illustrated in FIG. 5 to FIG. 7 is completed.

In the second manufacturing method, first, the cathode lead 31 is attached to the cathode 33, and the anode lead 32 is attached to the anode 34. Subsequently, the cathode 33 and the anode 34 are layered with the separator 35 in between and spirally wound. After that, the protective tape 37 is adhered to the outermost periphery thereof, and thereby a spirally wound body as a precursor of the spirally wound electrode body 30 is formed. Subsequently, after the spirally wound body is sandwiched between two pieces of the film-like package members 40, the outermost peripheries except for one side are bonded by thermal fusion bonding or the like to obtain a pouched state, and the spirally wound body is contained in the pouch-like package member 40. Subsequently, a composition of matter for electrolyte containing an electrolytic solution, a monomer as a raw material for the polymer compound, a polymerization initiator, and if necessary other material such as a polymerization inhibitor is prepared, which is injected into the pouch-like package member 40. After that, the opening of the package member 40 is hermetically sealed by thermal fusion bonding or the like. Finally, the monomer is thermally polymerized to obtain a polymer compound. Thereby, the gel electrolyte layer 36 is formed. Accordingly, the secondary battery is completed.

In the third manufacturing method, the spirally wound body is formed and contained in the pouch-like package member 40 in the same manner as that of the second manufacturing method, except that the separator 35 with both faces coated with a polymer compound is used firstly. Examples of polymer compounds with which the separator 35 is coated include a polymer containing vinylidene fluoride as a component (a homopolymer, a copolymer, a multicomponent copolymer or the like). Specific examples thereof include polyvinylidene fluoride, a binary copolymer containing vinylidene fluoride and hexafluoropropylene as a component, and a ternary copolymer containing vinylidene fluoride, hexafluoropropylene, and chlorotrifluoroethylene as a component. As a polymer compound, in addition to the foregoing polymer containing vinylidene fluoride as a component, another one or more polymer compounds may be contained. Subsequently, an electrolytic solution is prepared and injected into the package member 40. After that, the opening of the package member 40 is hermetically sealed by thermal fusion bonding or the like. Finally, the resultant is heated while a weight is applied to the package member 40, and the separator 35 is contacted with the cathode 33 and the anode 34 with the polymer compound in between. Thereby, the electrolytic solution is impregnated into the polymer compound, and the polymer compound is gelated to form the electrolyte layer 36. Accordingly, the secondary battery is completed.

In the third manufacturing method, the battery swollenness is inhibited more compared to in the first manufacturing method. Further, in the third manufacturing method, the monomer, the solvent and the like as a raw material of the polymer compound are hardly left in the electrolyte layer 36 compared to the second manufacturing method. In addition, the formation step of the polymer compound is favorably controlled. Thus, sufficient contact characteristics are obtained between the cathode 33/the anode 34/the separator 35 and the electrolyte layer 36.

According to the laminated film type secondary battery of this embodiment, the anode active material layer coating film 34C composed of metal barium or the like is provided on the anode active material layer 34B. Thus, chemical stability of the anode 34 is improved. Accordingly, operation similar to that of the cylinder type secondary battery is obtained, and thus cycle characteristics are able to be improved. Other effects are similar to those of the cylinder type secondary battery.

In the laminated film type secondary battery, instead of providing the anode active material layer coating film 34C on the anode active material layer 34B, the anode active material layer 34B may be formed by using the anode active material particles 221 covered with the anode active material particle coating film 222 in the same manner as that of the cylinder type secondary battery. In this case, cycle characteristics are able to be improved as well.

1-3. Coin type secondary battery

Further, the secondary battery of this embodiment may be applied to a coin type secondary battery. FIG. 8 illustrates a cross sectional structure of a coin type secondary battery. A description will be given of elements of the coin type secondary battery with reference to the elements of the cylinder type secondary battery as appropriate. The secondary battery is a lithium ion secondary battery in which a package can 54 containing a cathode 51 and a package cup 55 containing an anode 52 are caulked with a separator 53 and a gasket 56.

The package can 54, the package cup 55, and the gasket 56 have a structure similar to those of the battery can 11 and the gasket 17.

The cathode 51 has a structure in which, for example, a cathode active material layer 51B is provided on a single face of a cathode current collector 51A. The structures of the cathode current collector 51 A and the cathode active material layer 51B are respectively similar to those of the cathode current collector 21 A and the cathode active material layer 21B. The anode 52 has a structure in which, for example, an anode active material layer 52B and an anode active material layer coating film 52C are provided on an anode current collector 52A. The structures of the anode current collector 52A, the anode active material layer 52B, and the anode active material layer coating film 52C are respectively similar to the structures of the anode current collector 22A, the anode active material layer 22B, and the anode active material layer coating film 22C. The structure of the separator 53 is similar to the structure of the separator 23. The electrolytic solution has a composition similar to that of the electrolytic solution in the cylinder type secondary battery.

The secondary battery is manufactured, for example, by the following procedure. First, the cathode 51 is formed by forming the cathode active material layer 51 B on the cathode current collector 51 A and the anode 52 is formed by forming the anode active material layer 52B and the anode active material layer coating film 52C on the anode current collector 52A by procedures similar to those of the cathode 21 and the anode 22. Subsequently, the cathode 51 and the anode 52 are punched out into a pellet with a given diameter. Finally, the cathode 51 is contained in the package can 54, the anode 52 is bonded to the package cup 55, and the resultant is layered with the separator 53 impregnated with the electrolytic solution in between. After that, the resultant is caulked with the gasket 56. Thereby, the secondary battery illustrated in FIG. 8 is completed.

According to the coin type secondary battery of this embodiment, the anode active material layer coating film 52C composed of metal barium or the like is provided on the anode active material layer 52B. Thus, electrochemical stability of the anode 52 is improved. Accordingly, operation similar to that of the cylinder type secondary battery is obtained, and thus cycle characteristics are able to be improved. Other effects are similar to those of the cylinder type secondary battery.

In the coin type secondary battery, instead of providing the anode active material layer coating film 52C on the anode active material layer 52B, the anode active material layer 52B may be formed by using the anode active material particles 221 covered with the anode active material particle coating film 222 in the same manner as that of the cylinder type secondary battery. In this case, cycle characteristics are able to be improved as well.

2. Second embodiment (secondary battery in which a cathode contains metal barium or the like)

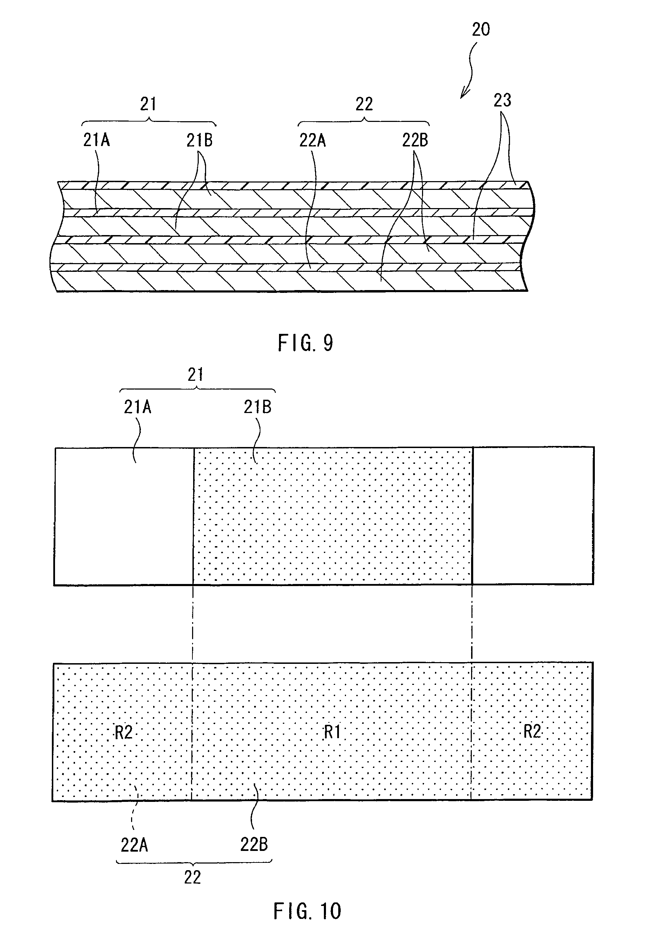

Next, a description will be given of a second embodiment. FIG. 9 illustrates a cross sectional structure of the spirally wound electrode body 20, and corresponds to FIG. 2. FIG. 10 illustrates a planar structure of the cathode 21 and the anode 22 illustrated in FIG. 9, and corresponds to FIG. 3.

In the secondary battery, the anode active material layer coating film 22C is formed firstly at the time of charge and discharge differently from the first embodiment in which the anode active material layer coating film 22C is already formed before charge and discharge. The secondary battery of this embodiment is, for example, a cylinder type secondary battery having a structure similar to that of the first embodiment, except for the points described below.

The cathode active material layer 21 B of the cathode 21 contains metal barium or the like together with the cathode active material before charge and discharge. The metal barium or the like contained in the cathode active material layer 21 B is used for forming the anode active material layer coating film 22C in the anode active material layer 22B at the time of charge and discharge. Thus, after the active material layer coating film 22C is formed at the time of charge and discharge, the cathode active material layer 21B may contain metal barium or the like, but does not necessarily contain the metal barium or the like. The content of the metal barium or the like in the cathode active material layer 21B is not particularly limited.

As illustrated in FIG. 9 and FIG. 10, the anode active material layer 22B of the anode 22 is not provided with the anode active material layer coating film 22C before charge and discharge. However, after charge and discharge, the anode active material layer coating film 22C is provided as illustrated in FIG. 2 and FIG. 3. Thus, in the anode 22 after charge and discharge, as in the first embodiment, peak attribute to Ba3d5/2 is obtained in the range from 778 eV to 782 eV both inclusive by, for example, surface analysis using XPS. Further, at least one peak of Ba⁺, BaOH⁺, BaF⁺, BaOLi⁺, BaOHFLi⁺, BaF₂Li⁺, BaOLi₂F⁺, BaO₂Li₃⁺, BaOHLi₂F2⁺, BaLi₂F₃⁺, BaCO₃Li⁺, BaSO₄Li⁺, and BaLi₂PO₄⁺ is obtained as a positive secondary ion by surface analysis using TOF-SIMS.

In the secondary battery, when lithium ions are inserted and extracted between the cathode 21 and the anode 22 through the electrolytic solution at the time of charge and discharge, the anode active material layer coating film 22C is formed on the anode active material layer 22B by using the metal barium or the like contained in the cathode active material layer 21B. It is enough that the number of times of charge and discharge necessary for forming the anode active material layer coating film 22C is at least one.

The secondary battery is manufactured by a procedure similar to that of the first embodiment, except that the cathode active material layer 21 B is formed by using a cathode mixture containing metal barium or the like together with the cathode active material, and the anode active material layer coating film 22C is not formed on the anode active material layer 22B.

According to the cylinder type secondary battery of this embodiment, the cathode active material layer 21 B of the cathode 21 contains metal barium or the like before charge and discharge. Thus, even if the anode active material layer coating film 22C is not previously formed before charge and discharge, the anode active material layer coating film 22C is formed on the anode active material layer 22B at the time of charge and discharge. Accordingly, operation similar to that of the first embodiment is obtained, and thus cycle characteristics are able to be improved. Other effects are similar to those of the first embodiment.

A description will be given of characteristics of the secondary battery in the case where metal barium or the like is contained in the cathode active material layer 2 1 B. As illustrated in FIG. 10, before charge and discharge, the anode active material layer coating film 22C is not formed yet. Thus, the anode active material layer coating film 22C does not exist in the regions R1 and R2. Meanwhile, since the anode active material layer coating film 22C is formed by using charge and discharge reaction, the anode active material layer coating film 22C is formed only in the region R1 involved in charge and discharge reaction, and is not formed in the region R2 not involved in charge and discharge reaction. Thus, to check whether or not the anode active material layer coating film 22C is formed by using charge and discharge reaction, it is enough to examine whether or not the anode active material layer coating film 22C exists in the region R1 but not in the region R2. If the anode active material layer coating film 22C exists only in the region R1 after charge and discharge, it means that the anode active material layer coating film 22C is formed at the time of charge and discharge.

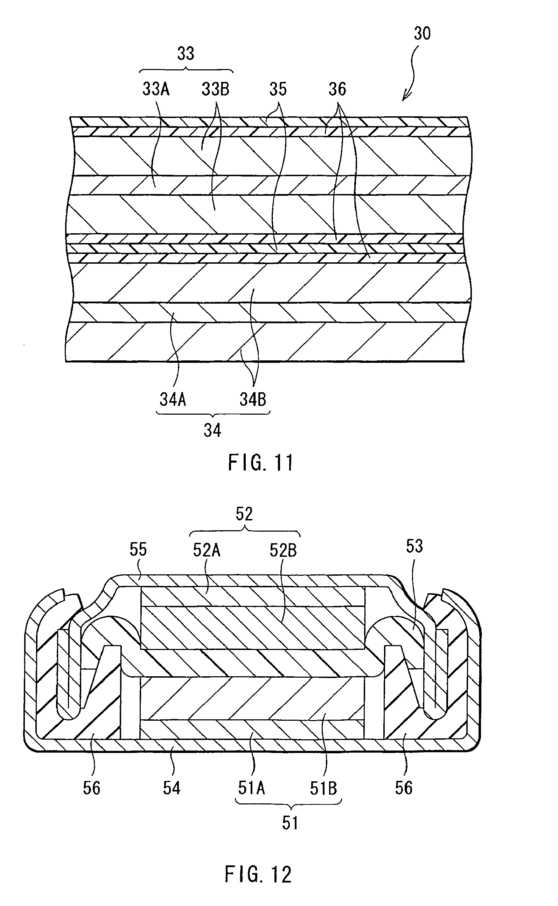

As in the first embodiment, the secondary battery of this embodiment is not limited to the cylinder type secondary battery, but may be applied to a laminated film type secondary battery or a coin type secondary battery as illustrated in FIG. 11 and FIG. 12. In this case, the anode active material layer coating films 34C and 52C are not formed before charge and discharge, but metal barium or the like is contained in the cathode active material layers 34B and 52B. In these cases, cycle characteristics are able to be improved.

Further, as a case that the cathode 21 contains metal barium or the like, the description has been given of the case that the cathode active material layer 21B contains metal barium or the like, but the aspect is not limited thereto. Thought not specifically illustrated by a figure, for example, as described in the first embodiment, the cathode active material layer coating film containing metal barium or the like may be formed on the cathode active material layer 21B, or the cathode active material particles covered with the cathode active material particle coating film containing metal barium or the like may be used to form the cathode active material layer 21 B. In these cases, cycle characteristics are able to be improved. It is needless to say that the foregoing three aspects that the cathode 21 contains metal barium or the like may be used singly, or two or more thereof may be used by mixture.

3. Third embodiment (secondary battery in which an electrolyte contains a barium compound or the like)

Next, a description will be given of a third embodiment. In the secondary battery of this embodiment, differently from the first and the second embodiments in which the cathode 21 or the anode 22 contains metal barium or the like, the electrolyte contains at least one of barium oxide, barium hydroxide, barium halide, barium carbonate, barium sulfate, barium nitrate, barium phosphate, barium oxalate, and barium acetate (hereinafter collectively referred to as "barium compound or the like"). The secondary battery is a cylinder type secondary battery having a structure similar to that of the first embodiment, except for the points described below.

The electrolyte contains the barium compound or the like together with a solvent and an electrolyte salt before charge and discharge. The barium compound or the like contained in the electrolyte is used for forming the anode active material layer coating film 22C on the anode active material layer 22B at the time of charge and discharge. Thus, after the anode active material layer coating film 22C is formed at the time of charge and discharge, the electrolyte does not necessarily contain the barium compound or the like. As the barium compound or the like contained in the electrolyte, an organic acid barium salt capable of being sufficiently dissolved into the solvent is preferable. The content of the barium compound or the like in the solvent is not particularly limited.

As in the second embodiment, the anode active material layer 22B of the anode 22 is not provided with the anode active material layer coating film 22C before charge and discharge. However, after charge and discharge, the anode active material layer coating film 22C is provided. Thus, in the anode 22 after charge and discharge, as in the first embodiment, peak attribute to Ba3d5/2 is obtained in the range from 778 eV to 782 eV both inclusive by surface analysis using XPS. Further, at least one peak of Ba⁺, BaOH⁺, BaF⁺, BaOLi⁺, BaOHFLi⁺, BaF₂Li⁺, BaOLi₂F⁺, BaO₂Li₃⁺, BaOHLi₂F₂⁺, BaLi₂F₃⁺, BaCO₃Li⁺, BaSO₄Li⁺, and BaLi₂PO₄⁺ is obtained as a positive secondary ion by surface analysis using TOF-SIMS.

In the secondary battery, when lithium ions are inserted and extracted between the cathode 21 and the anode 22 through the electrolytic solution at the time of charge and discharge, the anode active material layer coating film 22C is formed on the anode active material layer 22B by using the barium compound or the like contained in the electrolyte.

The secondary battery is manufactured by a procedure similar to that of the first embodiment, except that the electrolyte is prepared to contain the barium compound or the like together with the solvent and the electrolyte salt, and the anode active material layer coating film 22C is not formed on the anode active material layer 22B.

According to the cylinder type secondary battery of this embodiment, the electrolyte contains the barium compound or the like before charge and discharge. Thus, even if the anode active material layer coating film 22C is not previously formed before charge and discharge, the anode active material layer coating film 22C is formed on the anode active material layer 22B at the time of charge and discharge. Accordingly, operation similar to that of the first embodiment is obtained, and thus cycle characteristics are able to be improved. Other effects are similar to those of the first embodiment.

As in the first embodiment, the secondary battery of this embodiment is not limited to the cylinder type secondary battery, but may be applied to a laminated film type secondary battery or a coin type secondary battery as illustrated in FIG. 11 and FIG. 12. In this case, the anode active material layer coating films 34C and 52C are not formed before charge and discharge, but the barium compound or the like is contained in the electrolyte. In these cases, cycle characteristics are able to be improved.

The descriptions for the first to the third embodiments have been given. The aspects for a location (the cathode, the anode, or the electrolyte) containing the barium compound or the like described in the first to the third embodiments may be used singly, or two or more thereof may be used by mixture. In particular, as a location containing the barium compound or the like, the cathode and the anode are more preferable than the electrolyte, and the anode is more preferable than the cathode. This is because by introducing the barium compound or the like into the cathode and the anode directly involved in charge and discharge reaction, a more stable and more rigid coat is formed with good reproducibility than in the case that the barium compound or the like is introduced into the electrolyte. The anode is preferable, because in the case where lithium ions are inserted in the anode at the time of charge, by introducing the barium compound or the like into the anode into which lithium ions are inserted, chemical stability of the anode is significantly improved.

Examples

Examples will be described in detail.

Examples 1-1 to 1-9

The coin type lithium ion secondary batteries illustrated in FIG. 8 were fabricated by the following procedure.

First, the cathode 51 was formed. First, 90 parts by mass of Li_{0.98}Co_{0.15}Ni_{0.80}Al_{0.05}O_{2.10} (Average particle diameter by laser scattering method: 14 µm) as a cathode active material, 5 parts by mass of graphite as a cathode electrical conductor, and 5 parts by mass of polyvinylidene fluoride as a cathode binder were mixed to obtain a cathode mixture. Subsequently, the cathode mixture was dispersed in N-methyl-2-pyrrolidone to obtain paste cathode mixture slurry. Subsequently, the cathode current collector 51 A made of an aluminum foil (thickness: 20 µm) was coated with the cathode mixture slurry. After that, the resultant was compression-molded by a roll pressing machine to form the cathode active material layer 51B. Finally, the cathode current collector 51 A on which the cathode active material layer 51 B was formed was punched out into a pellet having a diameter of 15.5 mm.

Next, the anode 52 was formed. First, silicon was deposited on the anode current collector 52A made of a copper foil (thickness: 10 µm) by using electron beam evaporation method. Subsequently, the anode current collector 52A on which the anode active material layer 52B was formed was punched out into a pellet having a diameter of 16 mm. Subsequently, a 2% aqueous solution of a barium compound was prepared as a coat formation solution. After that, the pellet was dipped into the solution for several seconds. Barium compound types are as illustrated in Table 1. In the case where a plurality of barium compound types were used, the weight ratio of each barium compound was equal to each other. Finally, the pellet was pulled out from the coat formation solution to form the anode active material layer coating film 52C.

Next, the cathode 51, the anode 52, and the separator 53 made of a microporous polypropylene film were layered so that the cathode active material layer 5 1 B and the anode active material layer 52B were opposed to each other with the separator 53 in between. After that, the resultant was contained in the package can 54. Subsequently, after 4-fluoro-1,3-dioxole-2-one (FEC) and diethyl carbonate (DEC) were mixed as a solvent, LiPF₆ as an electrolyte salt was dissolved to prepare an electrolytic solution. At that time, the mixture ratio of FEC and DEC was 50:50 by weight ratio, and the content of LiPF₆ was 1 mol/kg to the solvent. Finally, after the separator 53 was impregnated with the electrolytic solution, the resultant was caulked by laying the package cup 55 on the package can 54 with the gasket 56 in between. Accordingly, the coin type secondary battery was completed. In forming the secondary battery, the thickness of the cathode active material layer 51B was adjusted to prevent metal lithium from being precipitated on the anode 52 at the time of full charge.

Example 1-10

A procedure similar to that of Examples 1-1 to 1-9 was executed, except that the anode active material layer coating film 52C was formed by accumulating metal barium on the anode active material layer 52B by using resistance heating method.

Example 1-11

A procedure similar to that of Examples 1-1 to 1-10 was executed, except that the anode active material layer coating film 52C was not formed.

The cycle characteristics for the secondary batteries of Examples 1-1 to 1-11 were examined. The results illustrated in Table 1 were obtained.

In examining the cycle characteristics, two cycles of charge and discharge were performed in the atmosphere at 23 deg C to measure the discharge capacity. After that, the secondary battery was charged and discharged repeatedly in the same atmosphere until the total number of cycles became 100 cycles, and the discharge capacity was measured. From the obtained result, the discharge capacity retention ratio (%)=(discharge capacity at the 100th cycle/discharge capacity at the second cycle)*100 was calculated. In one cycle, after charge was performed at a constant current density of 1 mA/cm² until the battery voltage reached 4.2 V, discharge was performed at a constant current density of 1 mA/cm² until the final voltage reached 2.5 V.

For the secondary batteries of Examples 1-1 to 1-11, surface analysis of the anode 52 was made by using XPS and TOF-SIMS.

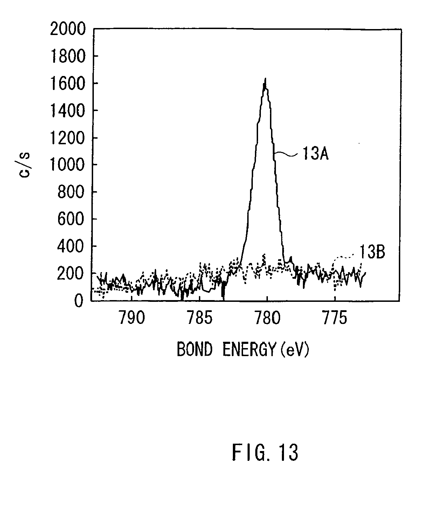

In the analysis by XPS, whether or not peak (XPS peak) attribute to Ba3d5/2 due to existence of metal barium or the like is obtained in the range from 778 eV to 782 eV both inclusive was examined. In that case, photoelectron spectrum was measured by using QUANTERA SXM (manufactured by ULVAC-PHI Inc.) as an analyzer, and radiating monochrome AL-kα ray (1486.6 eV, beam size: about 100 µmΦ). Charge neutralizing treatment was not performed. Further, F1s peak was used for energy correction for spectrum. More specifically, after Fls spectrum was measured for a measurement sample, waveform was analyzed by using commercially available software, and main peak position existing on the minimum bond energy side was 685,1 eV. FIG. 13 illustrates anode surface analysis results by XPS (13A: Example 1-9; 13B: Example 1-11).

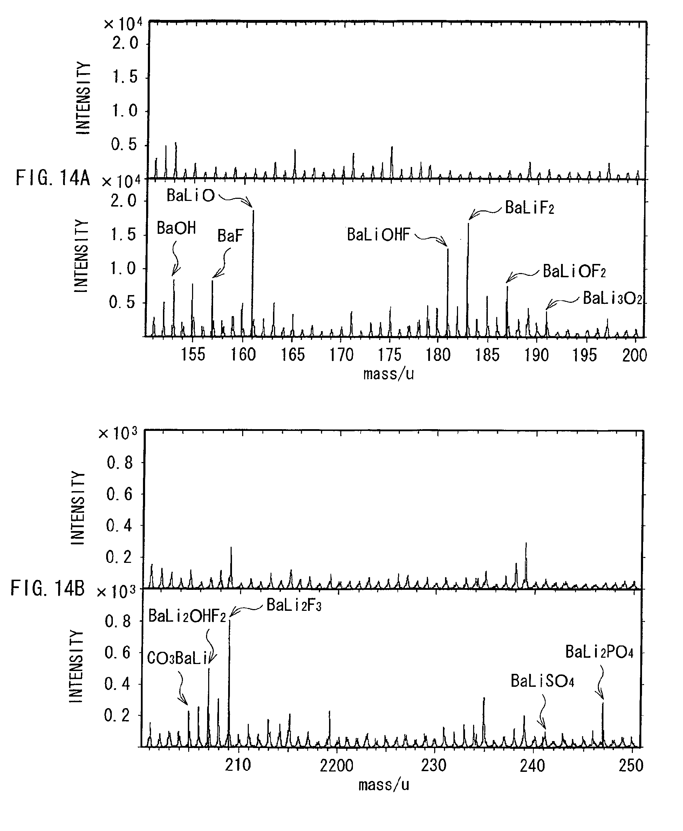

In the analysis by TOF-SIMS, whether or not peak (TOF-SIMS peak) of a positive secondary ion due to existence of the metal barium or the like was obtained was examined. The positive secondary ion is at least one of Ba⁺, BaOH⁺, BaF⁺, BaOLi⁺, BaOHFLi⁺, BaF₂Li⁺, BaOLi₂F⁺, BaO₂Li₃⁺, BaOHLi₂F₂⁺, BaLi₂F₃⁺, BaCO₃Li⁺, BaSO₄Li⁺, and BaLi₂PO₄⁺. In this case, TOF-SIMS V (manufactured by ION-TOF) was used as an analyzer. Further, analysis conditions were as follows: primary ion: Bi₃⁺ (9.7952*10¹¹ ions/cm²), accelerating voltage of an ion gun: 25 keV, analysis mode: bunching mode, current of irradiation ion (measured in pulse beam): 0.3 pA, pulse frequency: 10 kHz, mass range: 1 amu to 800 amu both inclusive, scanning range: 200 µm^{*}200 µm, mass resolution: M/ΔM: 6800 (C₂H₅⁺) and 5900 (CH₂⁻). FIGs. 14A and 14B illustrate anode surface analysis results by TOF-SIMS (upper sections of FIGs. 14A and 14B: Example 1-11; lower sections of FIGs. 14A and 14B: Example 1-9).

Table 1

Cathode active material: Li_{0.98}Co_{0.15}Ni_{0.80}Al_{0.05}O_{2.10}

Anode active material: Si (electron beam evaporation method)

| Table 1 | Anode active material layer coating film | XPS peak | TOF-SIMS peak | Discharge capacity retention ratio (%) |
|---|---|---|---|---|
| Example 1-1 | Barium sulfate | Present | Present | 77 |
| Example 1-2 | Barium oxide | Present | Present | 80 |
| Example 1-3 | Barium hydroxide | Present | Present | 78 |
| Example 1-4 | Barium fluoride | Present | Present | 85 |
| Example 1-5 | Barium carbonate | Present | Present | 81 |
| Example 1-6 | Barium phosphate | Present | Present | 83 |
| Example 1-7 | Barium oxide+ barium hydroxide | Present | Present | 85 |
| Example 1-8 | Barium oxide+barium hydroxide+barium fluoride | Present | Present | 86 |
| Example 1-9 | Barium oxide+barium hydroxide+barium fluoride+barium phosphate | Present | Present | 90 |
| Example 1-10 | Metal barium | Present | Present | 88 |
| Example 1-11 | - | Not present | Not present | 76 |

In Examples 1-1 to 1-10 in which the anode active material layer coating film 52C was formed, XPS peak was obtained in the vicinity of 780 eV, and TOF-SIMS peak due to the positive secondary ion was obtained, differently from Example 1-11 in which the anode active material layer coating film 52C was not formed. Further, in Examples 1-1 to 1-10, the discharge capacity retention ratio was higher than that of Example 1-11. In that case, in the case where barium fluoride or barium phosphate was used, the discharge capacity retention ratio was further increased, and in the case where metal barium was used, the discharge capacity retention ratio was even further increased. Accordingly, in the secondary battery , the anode active material layer coating film 52C containing metal barium or the like was formed on the anode active material layer 52B. Thereby, in the case where silicon was used as an anode active material and electron beam evaporation method was used as a method of forming the anode active material layer 52B, cycle characteristics were improved.

Examples 2-1 to 2-3

A procedure similar to that of Examples 1-4, 1-9, and 1-11 was executed, except that the anode active material layer 52B was formed by using sintering method. In forming the anode active material layer 52B, first, 90 parts by mass of silicon powder (median diameter: 1 µm) as an anode active material and 10 parts by mass of polyvinylidene fluoride as an anode binder were mixed to obtain an anode mixture. After that, the anode mixture was dispersed in N-methyl-2-pyrrolidone to obtain paste anode mixture slurry. Subsequently, the anode current collector 52A was coated with the anode mixture slurry. After that, the resultant was compression-molded by a roll pressing machine to form the anode active material layer 52B. Finally, the anode active material layer 52B was heated under conditions of 400 deg C for 12 hours. For the secondary batteries of Examples 2-1 to 2-3, cycle characteristics and the like were examined. The results illustrated in Table 2 were obtained.

Table 2

Cathode active material: Li_{0.98}Co_{0.15}Ni_{0.80}Al_{0.05}O_{2.10}

Anode active material: Si (sintering method)

| Table 2 | Anode active material layer coating film | XPS peak | TOF-SIMS peak | Discharge capacity retention ratio (%) |
|---|---|---|---|---|
| Example 2-1 | Barium fluoride | Present | Present | 72 |
| Example 2-2 | Barium oxide+barium hydroxide+barium fluoride+barium phosphate | Present | Present | 77 |
| Example 2-3 | - | Not present | Not present | 66 |

As in the results of Table 1, in Examples 2-1 and 2-2, XPS peak and TOF-SIMS peak were obtained, and the discharge capacity retention ratio was higher than that of Example 2-3. Accordingly, in the case where sintering method was used as a method of forming the anode active material layer 52B, cycle characteristics were improved as well.

Examples 3-1 to 3-3

A procedure similar to that of Examples 1-4, 1-9, and 1-11 was executed, except that a tin cobalt carbon alloy (SnCoC) as the SnCoC-containing material was used as an anode active material, and coating method was used as a method of forming the anode active material layer 52B.

In forming the anode active material layer 52B, first, cobalt powder and tin powder were alloyed to obtain cobalt tin alloy powder. After that, the resultant was added with carbon powder and dry-mixed. Subsequently, 20 g of the foregoing mixture and about 400 g of a corundum being 9 mm in diameter were set in a reaction container of a planetary ball mill (manufactured by Ito Seisakusho Co.). Subsequently, inside of the reaction container was substituted with argon atmosphere. After that, 10 minute operation at 250 rpm and 10 minute break were repeated until the total operation time reached 30 hours. Subsequently, the reaction container was cooled down to room temperature and SnCoC was taken out. After that, the resultant was screened through a 280 mesh sieve to remove coarse grain.

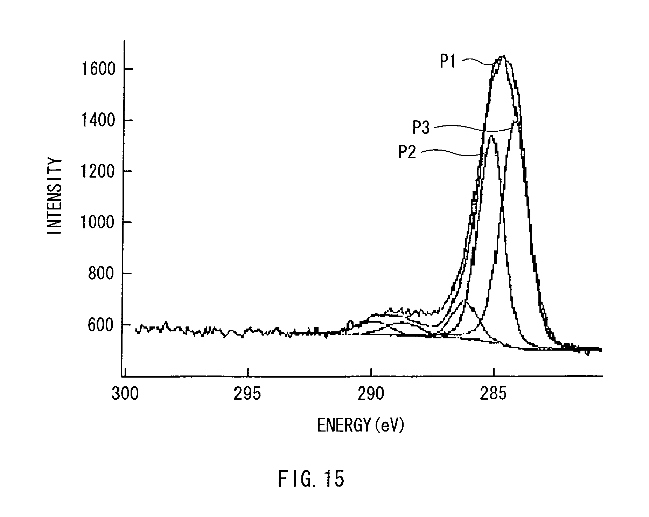

The composition of SnCoC was analyzed. The tin content was 48.0 wt%, the cobalt content was 23.0 wt%, the carbon content was 20.0 wt%, and the ratio of tin and cobalt (Co/(Sn+Co)) was 32.4 wt%. At that time, the tin content and the cobalt content were measured by Inductively Coupled Plasma (ICP) emission analysis, and the carbon content was measured by carbon sulfur analysis equipment. Further, SnCoC was analyzed by X-ray diffraction method. A diffraction peak having a half-width of 1.0 or more in the range of 2θ=from 20 deg to 50 deg both inclusive was observed. Further, when SnCoC was analyzed by XPS, as illustrated in FIG. 15, peak P1 was obtained. When the peak P1 was analyzed, peak P2 of the surface contamination carbon and peak P3 of Cls in the SnCoC-containing material existing on the lower energy side (region lower than 284.8 eV) were obtained. From the result, it was confirmed that carbon in SnCoC was bonded to other element.

80 parts by mass of SnCoC as an anode active material, 11 parts by mass of graphite and 1 part by mass of acetylene black as an anode electrical conductor, and 8 parts by mass of polyvinylidene fluoride as an anode binder were mixed to obtain an anode mixture. After that, the anode mixture was dispersed in N-methyl-2-pyrrolidone to obtain paste anode mixture slurry. Finally, the anode current collector 52A was coated with the anode mixture slurry. After that, the coating was compression-molded by using a rolling press machine.

For the secondary batteries of Examples 3-1 to 3-3, cycle characteristics and the like were examined. The results illustrated in Table 3 were obtained.

Table 3

Cathode active material: Li_{0.98}Co_{0.15}Ni_{0.80}Al_{0.05}O_{2.10}

Anode active material: SnCoC (coating method)

| Table 3 | Anode active material layer coating film | XPS peak | TOF-SIMS peak | Discharge capacity retention ratio (%) |
|---|---|---|---|---|
| Example 3-1 | Barium fluoride | Present | Present | 81 |
| Example 3-2 | Barium oxide+barium hydroxide+barium fluoride+barium phosphate | Present | Present | 85 |
| Example 3-3 | - | Not present | Not present | 77 |

As in the results of Table 1, in Examples 3-1 and 3-2, XPS peak and TOF-SIMS peak were obtained, and the discharge capacity retention ratio was higher than that of Example 3-3. Accordingly, in the case where the SnCoC-containing material was used as an anode active material, cycle characteristics were improved as well.

Examples 4-1 and 4-2

A procedure similar to that of Examples 1-4 and 1-9 was executed, except that an artificial graphite was used as an anode active material, and coating method was used as a method of forming the anode active material layer 52B. In forming the anode active material layer 52B, 90 parts by mass of the artificial graphite powder (median diameter: 20 µm) as an anode active material and 10 parts by mass of polyvinylidene fluoride as an anode binder were mixed to obtain an anode mixture. After that, the anode mixture was dispersed in N-methyl-2-pyrrolidone to obtain paste anode mixture slurry. Subsequently, the anode current collector 52A was coated with the anode mixture slurry. After that, the resultant was compression-molded.

Examples 4-3 and 4-4

A procedure similar to that of Examples 1-4 and 1-9 was executed, except that the anode active material particles 221 on which the anode active material particle coating film 222 was formed was used instead of forming the anode active material layer coating film 52C, and coating method was used as a method of forming the anode active material layer 52B. In forming the anode active material layer 52B, first, artificial graphite powder (median diameter: 20 µm) as the anode active material particles 221 was dipped in a coat formation solution for several seconds. Subsequently, the coat formation solution was filtered and dried, and thereby the anode active material particles 221 covered with the anode active material particle coating film 222 was obtained. Subsequently, 90 parts by mass of the anode active material particles 221 covered with the anode active material particle coating film 222 (artificial graphite) as an anode active material and 10 parts by mass of polyvinylidene fluoride as an anode binder were mixed to obtain an anode mixture. After that, the anode mixture was dispersed in N-methyl-2-pyrrolidone to obtain paste anode mixture slurry. Finally, the anode current collector 52A was coated with the anode mixture slurry. After that, the resultant was compression-molded by a rolling press machine.

Examples 4-5 to 4-7

A procedure similar to that of Examples 4-1 and 4-2 was executed, except that the anode active material layer coating film 52C was not formed, and a coat was formed by using α-aluminum oxide (Al₂O₃: median diameter: 1 µm) as a metal oxide or titanium oxide (TiO₂: median diameter: 1 µm). In forming the coat, 80 parts by mass of the metal oxide, 10 parts by mass of scale-like graphite, 4 parts by mass of polyvinylidene fluoride as a binder, and 1 part by mass of carboxymethyl cellulose as a disperser were mixed. After that, water was added to the mixture, the resultant was kneaded to obtain slurry. After that, the anode active material layer 52B was coated with the slurry and the resultant was dried.

Example 4-8

A procedure similar to that of Examples 4-1 and 4-2 was executed, except that lithium perchlorate (LiClO₄) was contained as an electrolyte salt in an electrolytic solution instead of forming the anode active material layer coating film 52C. In that case, the content of LiPF₆ was 1 mol/kg to the solvent, and the content of LiClO₄ was 1 mol/kg to the solvent.

For the secondary batteries of Examples 4-1 to 4-8, cycle characteristics and the like were examined. The results illustrated in Table 4 were obtained.

Table 4

Cathode active material: Li_{0.98}Co_{0.15}Ni_{0.80}Al_{0.05}O_{2.10}

Anode active material: artificial graphite (coating method)

| Table 4 | Anode active material layer coating film | Anode active material particle coating film | XPS peak | TOF-SIMS peak | Discharge capacity retention ratio (%) |
|---|---|---|---|---|---|
| Example 4-1 | Barium fluoride | - | Present | Present | 89 |
| Example 4-2 | Barium oxide+barium hydroxide+barium fluoride+barium phosphate | - | Present | Present | 92 |
| Example 4-3 | - | Barium fluoride | Present | Present | 90 |
| Example 4-4 | - | Barium oxide+barium hydroxide+barium fluoride+barium phosphate | Present | Present | 92 |
| Example 4-5 | - | - | Not present | Not present | 87 |
| Example 4-6 | Aluminum oxide | - | Not present | Not present | 84 |
| Example 4-7 | Titanium oxide | - | Not present | Not present | 81 |
| Example 4-8 | Lithium perchlorate | - | Not present | Not present | 57 |

As in the results of Table 1, in Examples 4-1 and 4-2, XPS peak and TOF-SIMS peak were obtained, and the discharge capacity retention ratio was higher than that of Example 4-5. Further, in Examples 4-3 and 4-4, XPS peak and TOF-SIMS peak were obtained, and the discharge capacity retention ratio was higher than that of Example 4-5. Meanwhile, in Examples 4-6 to 4-8 in which a compound other than the barium compound was used, XPS peak and TOF-SIMS peak were not obtained, and the discharge capacity retention ratio was lower than that of Example 4-5. The results showed that decomposition reaction of the electrolytic solution was inhibited in the case where the barium compound was used, but decomposition reaction of the electrolytic solution was not inhibited in the case where a compound other than the barium compound was used. The film quality of the coat in Examples 4-6 and 4-7 in which the metal oxide was used was not uniform or smooth differently from that of the anode active material layer coating film 52C but was an aggregation composed of nonuniform particles such as a sintered body. Thus, such a film was no longer "film." Accordingly, in the case where the artificial graphite was used as an anode active material, cycle characteristics were improved as well.

Examples 5-1 and 5-2

A procedure similar to that of Examples 1-1 to 1-10 was executed, except that a barium compound was contained in an electrolytic solution instead of forming the anode active material layer coating film 52C. The barium compound type was as illustrated in Table 5, and the content of the barium compound in the solvent was 1 wt%.

### Example 5-3

A procedure similar to that of Examples 5-1 and 5-2 was executed, except that a barium compound was not contained in an electrolytic solution.

For the secondary batteries of Examples 5-1 to 5-3, cycle characteristics and the like were examined. The results illustrated in Table 5 were obtained.

Table 5

Cathode active material: Li_{0.98}Co_{0.15}Ni_{0.80}Al_{0.05}O_{2.10}

Anode active material: Si (electron beam evaporation method)

| Table 5 | Electrolytic solution | XPS peak | TOF-SIMS peak | Discharge capacity retention ratio (%) |
|---|---|---|---|---|
| Example 5-1 | Barium acetate | Present | Present | 79 |
| Example 5-2 | Barium oxalate | Present | Present | 77 |
| Example 5-3 | - | Not present | Not present | 75 |

In Examples 5-1 and 5-2 in which the barium compound was contained in the electrolytic solution, differently from Example 5-3 in which the barium compound was not contained in the electrolytic solution, XPS peak and TOF-SIMS peak were obtained, and a high discharge capacity retention ratio was obtained. Accordingly, in the case where the barium compound was contained in the electrolytic solution, the anode active material layer coating film 52C was formed on the anode active material layer 52B by using charge and discharge reaction, and thus cycle characteristics were improved.

### Examples 6-1 and 6-2

A procedure similar to that of Examples 1-1 and 1-3 was executed, except that cathode active material particles on which a cathode active material particle coating film was formed were used instead of forming the anode active material layer coating film 52C. In forming the cathode active material layer 51B, first, Li_{0.98}Co_{0.15}Ni_{0.80}Al_{0.05}O_{2.10} as cathode active material particles was dipped in a coat formation solution for several seconds. Subsequently, the coat formation solution was filtered and dried, and thereby the cathode active material particles covered with the cathode active material particle coating film was obtained. Subsequently, 90 parts by mass of the cathode active material particles covered with the cathode active material particle coating film (Li_{0.98}Co_{0.15}Ni_{0.80}Al_{0.05}O_{2.10}) as a cathode active material, 5 parts by mass of graphite as a cathode electrical conductor, and 5 parts by mass of polyvinylidene fluoride as a cathode binder were mixed to obtain a cathode mixture. Finally, the cathode mixture was dispersed in N-methyl-2-pyrrolidone to obtain paste cathode mixture slurry. The cathode current collector 51A was coated with the cathode mixture slurry. After that, the resultant was compression-molded.

Example 6-3

A procedure similar to that of Examples 6-1 and 6-2 was executed, except that the cathode active material particle coating film was not formed.

For the secondary batteries of Examples 6-1 to 6-3, cycle characteristics and the like were examined. The results illustrated in Table 6 were obtained.

Table 6

Cathode active material: Li_{0.98}Co_{0.15}Ni_{0.80}Al_{0.05}O_{2.10}

Anode active material: Si (electron beam evaporation method)

| Table 6 | Cathode active material particle coating film | XPS peak | TOF-SIMS peak | Discharge capacity retention ratio (%) |
|---|---|---|---|---|
| Example 6-1 | Barium sulfate | Present | Present | 86 |
| Example 6-2 | Barium hydroxide | Present | Present | 87 |
| Example 6-3 | - | Not present | Not present | 76 |

In Examples 6-1 and 6-2 in which the cathode active material particle coating film was formed, differently from Example 6-3 in which the cathode active material particle coating film was not formed, XPS peak and TOF-SIMS peak were obtained, and a high discharge capacity retention ratio was obtained. Accordingly, in the case where the cathode active material particle coating film was formed, the anode active material layer coating film 52C was formed on the anode active material layer 52B by using charge and discharge reaction, and thus cycle characteristics were improved.

Specific examples in which metal barium or the like is contained in two or more of the cathode 51, the anode 52, and the electrolyte are not disclosed. However, from the foregoing results, it is evident that cycle characteristics are improved in the case where metal barium or the like is contained in the cathode 51, the anode 52, or the electrolyte. Further, there are no specific reason for cycle characteristics lowering in the case where metal barium or the like is contained in two or more of the cathode 51, the anode 52, and the electrolyte. Thus, in the case where metal barium or the like is contained in two or more of the cathode 51, the anode 52, and the electrolyte, it is evident that cycle characteristics are improved as well.

From the foregoing results of Table 1 to Table 6, in the secondary battery , the anode has the coat composed of metal barium or the like. Otherwise, the cathode contains metal barium or the like. Otherwise, the electrolyte contains barium compound or the like. Thus, cycle characteristics are improved not depending on the anode active material type, a method of forming the anode active material layer and the like.

In this case, cycle characteristics are more improved than in the case that the metal material (silicon or the SnCoC-containing material) is used than in the case that the carbon material (artificial graphite) is used as an anode active material. Accordingly, higher effect is able to be obtained in the case that the metal material (silicon or the SnCoC-containing material) is used than in the case that the carbon material (artificial graphite) is used as an anode active material. The results show that in the case where the metal material advantageous for realizing a high capacity is used as an anode active material, an electrolytic solution is easily decomposed than in the case that a carbon material is used, and thus decomposition inhibition effect of the electrolytic solution is significantly demonstrated.

The invention has been described with reference to the several embodiments and the several examples. However, the invention is not limited to the aspects described in the foregoing embodiments and the foregoing examples, and various modifications may be made. For example, use application of the anode, the cathode, and the electrolyte is not necessarily limited to the secondary battery, but may be other electrochemical device such as a capacitor.

Further, though the description has been given of the lithium ion secondary battery as a secondary battery type. However, the secondary battery is not limited thereto. The present application is similarly applicable to a secondary battery in which the anode capacity includes the capacity by inserting and extracting lithium ions and the capacity associated with precipitation and dissolution of metal lithium, and the anode capacity is expressed by the sum of these capacities. In this case, an anode material capable of inserting and extracting lithium ions is used as an anode active material, and the chargeable capacity of the anode material is set to a smaller value than the discharge capacity of the cathode.

Further, the description has been given with the specific examples of the case in which the battery structure is the cylinder type, the laminated film type, or the coin type, and with the specific example in which the battery element has the spirally wound structure. However, applicable structures are not limited thereto. The secondary battery is similarly applicable to a battery having other battery structure such as a square type battery and a button type battery or a battery in which the battery element has other structure such as a laminated structure.

Further, the description has been given of the case using lithium as an electrode reactant element, but the electrode reactant element is not necessarily limited thereto. As an electrode reactant element, for example, other Group 1 element such as sodium (Na) and potassium (K), a Group 2 element such as magnesium and calcium, or other light metal such as aluminum may be used. The effect is able to be obtained without depending on the electrode reactant element type, and thus even if the electrode reactant element type is changed, similar effect is able to be obtained.

Further, for barium compound type, the description has been given of only the barium compounds derived from the results of the examples (for example, barium oxide). However, the description does not totally deny a possibility that other type of barium compound is used. In other words, the foregoing barium compound types are types particularly preferable for obtaining the effects. Therefore, as long as effect is obtained, other barium compound types may be used.

It should be understood that various changes and modifications to the presently preferred embodiments described herein will be apparent to those skilled in the art. Such changes and modifications can be made without departing from the spirit and scope and without diminishing its intended advantages. It is therefore intended that such changes and modifications be covered by the appended claims.

## Claims

1. A secondary battery comprising:
an anode;
a cathode; and
an electrolyte,
wherein the anode includes an anode active material and a coat comprising a substance selected from the group consisting of metal barium and barium compounds.

2. A secondary battery according to Claim 1, wherein the anode and cathode are capable of inserting and extracting an electrode reactant.

3. A secondary battery according to Claim 2, wherein the electrode reactant is lithium.

4. A secondary battery according to any one of claims 1 to 3, wherein the coat is a coating film provided on a layer of the anode active material.

5. A secondary battery according to any one of claims 1 to 3, wherein the coat is a particle coating film which covers a plurality of anode active material particles.

6. A secondary battery according to any one claims 1 to 5, wherein the anode active material is selected from the group consisting of: graphitizable carbon, non-graphitizable carbon in which the spacing of (002) plane is 0.37 nm or more, graphite in which the spacing of (002) plane is 0.34 nm or less, and a material containing at least on of a metal element or a metalloid element capable of forming an alloy with lithium.

7. A secondary battery according to anyone of claims 1 to 5, wherein the anode active material is a SnCoC-containing material having a reaction phase containing tin, cobalt and carbon.

8. A secondary battery according to any one of the preceding claims, wherein the coat comprises one or more of the barium compounds, metal barium or a mixture thereof.

9. A secondary battery according to any one of the preceding claims, wherein the barium compounds are selected from the group consisting of: barium oxide, barium hydroxide, barium halide, barium sulfate, barium nitrate, barium phosphate, barium carbonate, barium oxalate and barium acetate.

10. A secondary battery according to any one of the preceding claims, wherein at least part of a surface of the anode active material is provided with the coat.

11. A secondary battery comprising:
an anode;
a cathode; and
an electrolyte,
wherein the cathode includes a substance selected from the group consisting of metal barium and barium compounds.

12. A secondary battery according to Claim 11, wherein the cathode includes a cathode active material mixture containing a cathode active material, and the substance selected from the group consisting of metal barium and barium compounds.

13. A secondary battery according to Claim 11, wherein the cathode includes a cathode active material layer, and the substance selected from the group consisting of metal barium and barium compounds is provided as a coating film on the cathode active material layer.

14. A secondary battery according to Claim 11, wherein the cathode includes cathode active material particles, and the substance selected from the group consisting of metal barium and barium compounds is provided as a particle coating film covering the cathode active material particles.

15. A secondary battery comprising:
an anode;
a cathode; and
an electrolyte,
wherein the electrolyte includes a barium compound.

16. A secondary battery according to Claim 15, wherein the barium compound is selected from the group consisting of: barium oxide, barium hydroxide, barium halide, barium sulfate, barium nitrate, barium phosphate, barium carbonate, barium oxalate and barium acetate.

17. A secondary battery according to Claim 15 or 16, wherein the electrolyte further includes a solvent and an electrolyte salt, and the barium compound is an organic acid barium salt capable of being dissolved in the solvent.

18. An anode comprising:
an anode active material; and
a coat comprising a substance selected from the group consisting of metal barium and barium compounds.

19. A cathode comprising:
a cathode active material; and
a substance selected from the group consisting of metal barium and barium compounds.

20. An electrolyte comprising:
a solvent;
an electrolyte salt; and
a barium compound.
